(19) Europäisches Patentamt
European Patent Office
Office européen des brevets

(11) **EP 4 660 790 A1**

(12) **EUROPEAN PATENT APPLICATION**

(43) Date of publication:
**10.12.2025 Bulletin 2025/50**

(21) Application number: **25179890.6**

(22) Date of filing: **30.05.2025**

(51) International Patent Classification (IPC):
**G06F 8/75** *(2018.01)* **G06F 21/57** *(2013.01)*
**G06F 11/3604** *(2025.01)*

(52) Cooperative Patent Classification (CPC):
**G06N 20/00; G06F 11/3604; G06F 11/3608;**
**G06F 21/577; G06N 3/08;** G06F 2221/033

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **03.06.2024 IN 202421043123**

(71) Applicant: **Tata Consultancy Services Limited
Maharashtra (IN)**

(72) Inventors:
• **DARKE, PRIYANKA**
  **411 028 Pune (IN)**
• **CHIMDYALWAR, BHARTI DEWRAO**
  **411 028 Pune (IN)**
• **VENKATESH, RAMANATHAN**
  **411057 Pune (IN)**
• **CHAKRABORTY, SUPRATIK**
  **400076 Mumbai (IN)**

(74) Representative: **Goddar, Heinz J.
Boehmert & Boehmert
Anwaltspartnerschaft mbB
Pettenkoferstrasse 22
80336 München (DE)**

(54) **PRIVACY PRESERVING VERIFICATION STRATEGY PREDICTION OF AN INPUT PROGRAM USING BOOLEAN RELATIVE METRICS**

(57) This disclosure relates generally to method and system for a privacy preserving verification strategy prediction of an input program using Boolean relative metrics. The method extracts a plurality of Boolean Relative Metrics (BRM), and (ii) a plurality of Portfolio Driven Boolean Relative Metrics (PDBRM) from an input program based on a mode of execution for a program verification task. The method then trains a program verification strategy predictor by a strategy prediction service provider, using a plurality of obfuscated BRM corresponding to the plurality of BRM, and a plurality of obfuscated PDBRM corresponding to the plurality of PRBRM, to predict a privacy preserving program verification strategy for the program verification task, using one of a plurality of strategy prediction models in a privacy preserving Strategy Prediction (SPRED) architecture. Further the program verification strategy predictor predicts the privacy preserving program verification strategy using a plurality of Boolean feature vectors.

FIG. 2

Result: {T,F,U}

**Description**

CROSS-REFERENCE TO RELATED APPLICATIONS AND PRIORITY

The present application claims priority from Indian provisional patent application no. 202421043123, filed on June 03, 2024. The entire contents of the aforementioned application are incorporated herein by reference.

TECHNICAL FIELD

The disclosure herein generally relates to program verification strategy prediction, and, more particularly, to a method and system for privacy preserving verification strategy prediction of an input program using Boolean relative metrics.

BACKGROUND

In the software industry despite significant advancement in program verification, no single program verification technique is known to work well for all classes of programs. To address this problem, portfolio verifiers with selection of program verification strategy had been used. The program verification strategy is a prioritized sequence of program verification techniques, custom selected for a given problem, from a portfolio of the program verification techniques. Machine learning (ML) is used to train a strategy predictor for programs. Training the strategy predictor requires access to a large collection of representative problems comprising the programs and properties to be verified, and relative performance metrics of the different program verification techniques in the portfolio on these problems. Similarly, using a trained predictor on a new program verification problem requires a user to provide the program and the properties as input to the strategy predictor. While this works in trusted settings, sharing programs across development and verification teams in different organizations, or even across different divisions of the same organization is often forbidden in practice. This is particularly true in a ML-as-a-service setting, where a strategy prediction is provided as a service on a cloud to proprietary software developers.

Software providers in an organization use a portfolio of recommended third-party verification tools for increased assurance of the delivered software. Given such a portfolio of tools, it is often difficult to determine which tool would be most effective for which software module. At the same time, since the program verification can consume significant computational resources, it can be prohibitively expensive to run all tools on all software modules every time to verify their correctness during a development cycle. Further using a customized program verification strategy for each software module is very effective in this setting. Indeed, different tools may be differentially effective for different software modules, and even for the same software module as it evolves over time. However, for a software developer to obtain customized program verification strategies for a large collection of software modules being developed is challenging. Further developing an in-house strategy predictor incurs significant overhead, including the effort required for training the predictor using a large training data set.

SUMMARY

Embodiments of the present disclosure present technological improvements as solutions to one or more of the above-mentioned technical problems recognized by the inventors in conventional systems. For example, in one embodiment, a method for privacy preserving verification strategy prediction of an input program using Boolean relative metrics is provided. The method includes receiving a program verification task comprising (i) an input program from among a plurality of input programs, and (ii) a plurality of property assertions to be verified for the input program, a portfolio comprising a plurality of program verification techniques, and a mode of execution. Further the method includes extracting a plurality of Boolean program features from the input program based on the mode of execution, wherein the plurality of Boolean program features comprises one of (i) a plurality of Boolean Relative Metrics (BRM), and (ii) a plurality of Portfolio Driven Boolean Relative Metrics (PDBRM). Further the method includes training a program verification strategy predictor by a strategy prediction service provider, using a plurality of obfuscated BRM corresponding to the plurality of BRM, and a plurality of obfuscated PDBRM corresponding to the plurality of PRBRM, to predict a privacy preserving program verification strategy for the program verification task, using one of a plurality of strategy prediction models in a privacy preserving Strategy Prediction (SPRED) architecture comprising (i) a Result Weighted Strategy Prediction (RWSP) BRM model, (ii) a RWSP PDBRM model, (iii) a Time Weighted Strategy Prediction (TWSP) BRM model, and (iv) a TWSP PDBRM model.

In another aspect, a system for privacy preserving verification strategy prediction of an input program using Boolean relative metrics is provided. The system comprising: a memory storing instructions; one or more communication interfaces; and one or more hardware processors coupled to the memory via the one or more communication interfaces, wherein the one or more hardware processors are configured by the instructions to: receive a program verification task comprising (i) an input program from among a plurality of input programs, and (ii) a plurality of property assertions to be verified for the input program, a portfolio comprising a plurality of program verification techniques, and a mode of execution; extract a plurality of Boolean program features from the input program based on the mode of execution, wherein the plurality of Boolean program features comprises (i) a plurality of Boolean Relative Metrics (BRM), and (ii) a plurality of Portfolio Driven Boolean Relative Metrics (PDBRM); and train a program verification strategy predictor by a strategy prediction service provider, using a plurality of obfuscated BRM corresponding to the plurality of BRM, and a plurality of obfuscated PDBRM corresponding to the plurality of PDBRM, to predict a privacy preserving program verification strategy for the program verification task, using one of a plurality of strategy prediction models in a privacy preserving Strategy Prediction (SPRED) architecture comprising (i) a Result Weighted Strategy Prediction (RWSP) BRM model, (ii) a RWSP PDBRM model, (iii) a Time Weighted Strategy Prediction (TWSP) BRM model, and (iv) a TWSP PDBRM model.

In yet another aspect, there are provided one or more non-transitory machine-readable information storage mediums comprising one or more instructions which when executed by one or more hardware processors cause a method for privacy preserving verification strategy prediction of an input program using Boolean relative metrics is provided. The method includes receiving a program verification task comprising (i) an input program from among a plurality of input programs, and (ii) a plurality of property assertions to be verified for the input program, a portfolio comprising a plurality of program verification techniques, and a mode of execution. Further the method includes extracting a plurality of Boolean program features from the input program based on the mode of execution, wherein the plurality of Boolean program features comprises one of (i) a plurality of Boolean Relative Metrics (BRM), and (ii) a plurality of Portfolio Driven Boolean Relative Metrics (PDBRM). Further the method includes training a program verification strategy predictor by a strategy prediction service provider, using a plurality of obfuscated BRM corresponding to the plurality of BRM, and a plurality of obfuscated PDBRM corresponding to the plurality of PRBRM, to predict a privacy preserving program verification strategy for the program verification task, using one of a plurality of strategy prediction models in a privacy preserving Strategy Prediction (SPRED) architecture comprising (i) a Result Weighted Strategy Prediction (RWSP) BRM model, (ii) a RWSP PDBRM model, (iii) a Time Weighted Strategy Prediction (TWSP) BRM model, and (iv) a TWSP PDBRM model.

It is to be understood that both the foregoing general description and the following detailed description are exemplary and explanatory only and are not restrictive of the invention, as claimed.

## BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system for privacy preserving verification strategy prediction of an input program using Boolean relative metrics, in accordance with some embodiments of the present disclosure.
FIG. 2 is a privacy preserving Strategy Prediction (SPRED) architecture depicting process flow of the system for the privacy preserving verification strategy prediction of the input program using the Boolean relative metrics, in accordance with some embodiments of the present disclosure.
FIG. 3 depicts a flow diagram of a method for the privacy preserving verification strategy prediction of the input program using the Boolean relative metrics, in accordance with some embodiments of the present disclosure, using the system of FIG. 1, in accordance with some embodiments of the present disclosure.
FIGS. 4A, 4B, and 4C depict a graphical performance comparison of a Result Weighted Strategy Prediction (RWSP) Portfolio Driven Boolean Relative Metrics (PDBRM) model versus a Verifolio, a VeriAbs, and a Random Strategy Selection Approach respectively, in accordance with some embodiments of the present disclosure.
FIGS. 5A, and 5B, depict a graphical performance comparison of the RWSP Boolean Relative Metrics (BRM) model versus a Verifolio, and the RWSP PDBRM respectively, in accordance with some embodiments of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

It is widely acknowledged in software verification that a single known program verification technique cannot work well for all problems. Moreover, identifying the best program verification technique for a given problem is extremely difficult in general. Therefore, a prioritized sequence of program verification techniques, also called a program verification strategy, is often used for each problem instance. However, for a software developer to obtain customized program verification strategies for a large collection of software modules being developed is challenging. Further developing an in-house strategy predictor incurs significant overhead, including the effort required for training the predictor using a large training data set. Using a strategy prediction service on a cloud is an attractive alternative proposition. However, a proprietary software developer would be very reluctant to give a strategy prediction service provider access to its code either for training or for actual program strategy prediction, due to intellectual property (IP) concerns.

For prediction of a privacy preserving verification strategy to work as a Machine Learning (ML)-as-a-service, two conflicting goals must be met during feature selection. Specifically, program features must represent characteristics of programs that really matter in determining differential effectiveness of the program verification techniques in a portfolio. At the same time, the program features must abstract away program details sufficiently enough, so that a semantically diverse class of programs maps to each combination of program feature values. This would ensure that information leakage about programs is minimized. Traditionally, program strategies are selected for a given program based on program features and past performance data of the program verification techniques in the given portfolio. For instance, the manually defined strategy selectors have successfully used Boolean program features for selection of the program verification strategy. Manual implementation of a strategy predictor requires expertise and is expensive and hence not scalable. Hence, machine learning (ML) methods have been used for automated strategy prediction. Feature engineering for ML methods involves creating features based on the program features like construct counts, or generic program descriptors such as abstract syntax trees (AST), program-dependence graphs (PDG), and control-flow graphs (CFG). Existing methods of ML based strategy prediction fail to significantly outperform their non-ML counterparts. This is evident from the results of the international competition on software verification (SV-COMP). Consider program1 from the SV-COMP benchmarks,

$$1 \quad int\ S\ =\ 40000;$$

$$2 \quad int\ main()\ \{$$

$$3 \quad int\ i;$$

$$4 \quad unsigned\ long\ long\ a;$$

$$5 \quad i\ =\ 0, a\ =\ 0;$$

$$6 \quad while(i\ <\ S)\{$$

$$7 \quad i\ =\ i\ +\ 1;$$

$$8 \quad a\ +=\ i;$$

$$9 \quad \}$$

$$10 \quad assert(a\ ==\ (S*(S+1))/2);$$

$$11 \quad return\ 0;$$

$$12 \quad \}$$

The above program is safe with respect to a property assertion at line number 10 and can be verified by a bounded model checking (BMC) since it has a known bound. However, the strategy predictors trained with a zoo of rational features representing relative occurrence of specific constructs or graphical program representations are unable to predict the BMC early in the program verification strategies they predict and run out of time for the given program. This is because to infer this information from graphs, a learner must be trained with a large dataset. Unfortunately, such a dataset is hard to obtain. In contrast, human verification experts know that the BMC can verify programs with known loop bounds, and these bounds can be computed using static analysis. If this loop bound information is provided to the strategy predictor, the prediction burden can be reduced.

The above program illustrates that using ML-driven strategy selection requires careful choice of features tailored to the program verification techniques in the portfolio. To make the strategy predictor effective for a class of programs and for the given portfolio of program verification techniques, a ML model must be trained with adequate representative programs and properties, and with representative performance metrics of different program verification techniques in the portfolio. However, such training requires the team involved in training and maintaining the strategy predictor to access representative code written by the development team which is forbidden by IP concerns.

Embodiments herein provide a method and system for a privacy preserving verification strategy prediction of an input program using Boolean relative metrics, in accordance with some embodiments of the present disclosure. The disclosed method predicts the privacy preserving verification strategy from abstract program features that do not reveal useful information about semantics of the input program. Given the challenges of training and using a program verification strategy predictor in a setting of limited trust, the disclosed method uses a plurality of obfuscated program features of input programs. The plurality of Boolean feature vectors of the training and evaluation data can be extracted and obfuscated at the client's end before sharing them with the team for training and maintaining the program verification strategy predictor. The method extracts the plurality of Boolean feature vectors from which the input program information cannot be derived, from a small randomly chosen subset of input programs, acting as a training data, of the client's code. The use of a plurality of Boolean program features helps in training the NN model with limited training data. The disclosed method is evaluated if this mode of training can give better results than existing methods, while not allowing the team providing selection of a privacy preserving program verification strategy as a service to recover any useful information about the programs for which prediction of the privacy preserving program verification strategy required.

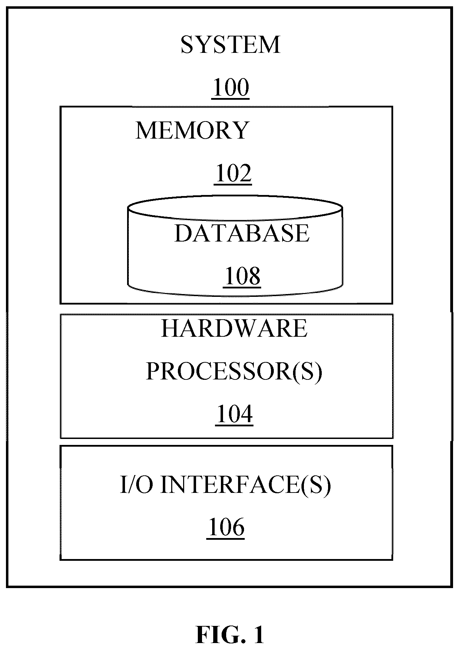

Referring now to the drawings, and more particularly to FIG. 1 through FIG. 5B, where similar reference characters denote corresponding features consistently throughout the figures, there are shown preferred embodiments, and these embodiments are described in the context of the following exemplary system and/or method.

FIG. 1 is a functional block diagram of a system 100, alternatively referred to as privacy preserving Strategy Prediction (SPRED), for the privacy preserving verification strategy prediction of the input program using the Boolean relative metrics, in accordance with some embodiments of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors.

Referring to the components of the system 100, in an embodiment, the processor (s) 104 can be the one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the processor(s) 104 is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface (s) 106 can include one or more ports for connecting a number of devices to one another or to another server.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. Thus, the memory 102 may comprise information pertaining to input(s)/output(s) of each step performed by the processor(s) 104 of the system 100 and methods of the present disclosure. In an embodiment, a database 108 is comprised in the memory 102, wherein the database 108 comprises information on a plurality of input programs, the portfolio, a mode of execution, the plurality of Boolean program features comprising a plurality of Boolean Relative Metrics (BRM) and a plurality of Portfolio Driven Boolean Relative Metrics (PDBRM), a plurality of obfuscated BRM, static analysis tools and techniques and a plurality of obfuscated PDBRM and thereof. The memory 102 further comprises an obfuscating technique, the program verification strategy predictor, the privacy preserving program verification strategy, a plurality of strategy prediction models, and a SPRED architecture. The above-mentioned technique(s) are implemented as at least one of a logically self-contained part of a software program, a self-contained hardware component, and/or, a self-contained hardware component with a logically self-contained part of a software program embedded into each of the hardware component (e.g., hardware processor 104 or memory 102) that when executed perform the method described herein.

The memory 102 further comprises information pertaining to input(s)/output(s) of each step performed by the systems and methods of the present disclosure. In other words, input(s) fed at each step and output(s) generated at each step are comprised in the memory 102 and can be utilized in further processing and analysis.

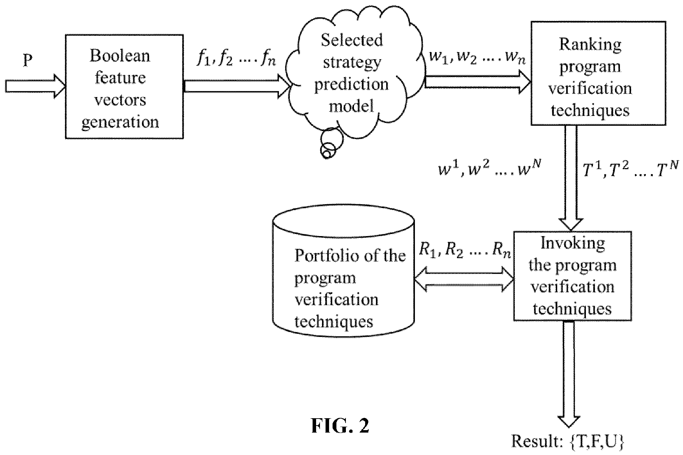

FIG. 2 is the SPRED architecture depicting process flow of the system for the privacy preserving verification strategy prediction of the input program using the Boolean relative metrics, in accordance with some embodiments of the present disclosure. A program verification task comprising the input program P encoded with a plurality of property assertions is fed to a feature vector generation component, to generate the plurality of Boolean feature vectors $f_1, f_2 .... f_n$, using static analysis tools and techniques. The plurality of Boolean feature vectors is obfuscated, using the obfuscating technique, to generate a plurality of obfuscated features, in accordance with some embodiments of the present disclosure. Further in a selected strategy prediction model component, the plurality of obfuscated features is fed to a selected and trained strategy prediction model from among a plurality of strategy prediction models which is hosted on the cloud by the strategy prediction service provider to predict the privacy preserving program verification strategy for the program verification task. The trained strategy prediction model is a trained neural network model. The trained strategy prediction model translates the obfuscated features vectors $f_1, f_2 .... f_n$, into a vector of measures of effectiveness $w_1, w_2 .... w_N$ of the corresponding plurality of program verification techniques $T_1, T_2 .... T_n$ in the portfolio. Each output node of the trained strategy prediction model corresponds to a specific verification technique $T_i$, and the value $w_i$ generated by trained strategy prediction model at that node represents the measure of effectiveness of the corresponding technique $T_i$, for the input program $P$. The values of the measure of effectiveness $w_i$ at all output nodes of the trained strategy prediction model are sorted in decreasing order and mapped to the plurality of verification techniques by a ranking program verification techniques component to sort the plurality program verification techniques constituting the privacy preserving program verification strategy ($T^1, T^2 ... . T^N$). Invoking program verification techniques component then invokes $T^1, T^2 ... . T^N$ in the privacy preserving program verification strategy to verify the input program $P$, until the program verification task is completed, or a predefined time allocated for each of the program verification technique of the plurality of program verification techniques is exceeded.

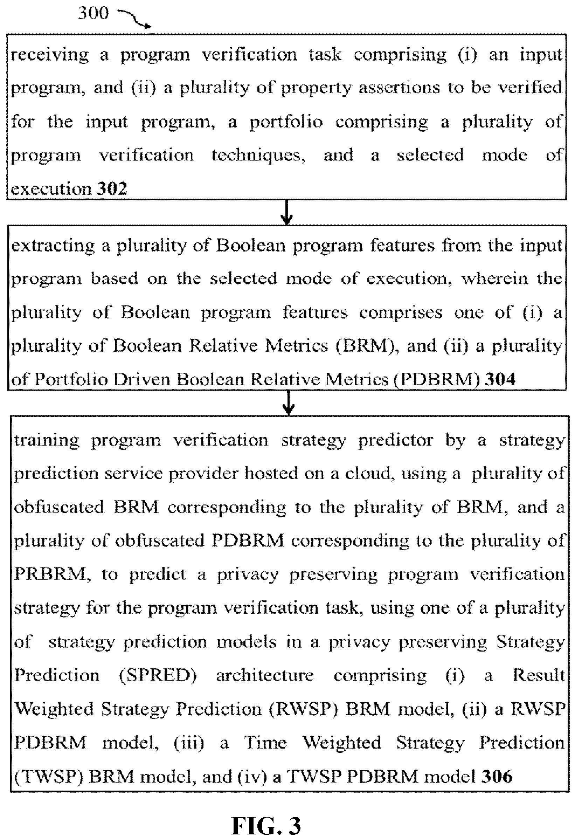

FIG. 3 depicts a flow diagram of a method 300 for the privacy preserving verification strategy prediction of the input program using the Boolean relative metrics, in accordance with some embodiments of the present disclosure, using the system of FIG. 1, in accordance with some embodiments of the present disclosure.

In an embodiment, the system 100 comprises one or more data storage devices or the memory 102 operatively coupled to the processor(s) 104 and is configured to store instructions for execution of steps of the method 400 by the processor(s) 104. The steps of the method 300 of the present disclosure will now be explained with reference to the components or blocks of the system 100 as depicted in FIG. 1, the functional architecture depicted in FIG. 2, and the steps of flow diagram as depicted in FIG 3. Although process steps, method steps, techniques or the like may be described in a sequential order, such processes, methods and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

Referring to steps of FIG. 3, at step 302 of the method 300, the one or more hardware processors are configured to receive the program verification task comprising (i) the input program from among the plurality of input programs, and (ii) the plurality of property assertions to be verified for the input program, the portfolio comprising the plurality of program verification techniques, and the mode of execution. The mode of execution is selected by a user, in accordance with some embodiments of the present disclosure. The mode of execution comprises selection of one of the plurality of strategy prediction models from among (i) a RWSP BRM model, (ii) a RWSP PDBRM model, (iii) a TWSP BRM model, and (iv) a TWSP PDBRM model, for the program verification task.

In the context of the subject disclosure, definitions of certain expressions and their usage are as explained below. $P$ is the input program encoded with the property assertion $\phi$

$T$ is the portfolio comprising the plurality of program verification techniques
$N$ is the plurality of program verification techniques in the portfolio, $|T| = N$
$T_i$ is the program verification technique from among the plurality of program verification techniques in the portfolio, $T_i \in T$, $1 \leq i \leq N$
$S$ is the privacy preserving program verification strategy or the plurality of program verification techniques in the portfolio $T$, $S = (T_{i1}, T_{i2},...,T_{iN})$
$R_i$ is a result True (T), False (F) or Unknown (U) when the program verification technique $T_i$ verifies program $P$, $R_i \in \{T, F, U\}$

At step 304 of the method 300, the one or more hardware processors are configured to extract the plurality of Boolean program features from the input program based on the mode of execution. The plurality of Boolean program features comprises (i) a plurality of BRM, and (ii) a plurality of PDBRM. A simpler representation of the input program that is fed to the selected strategy prediction model from among the plurality of strategy prediction models leads to better learning with a limited training dataset. Hence program features of the input program are modeled as Boolean variables that provide to capture attributes of syntax or semantics of the input program. These are termed as the plurality of BRM. The term Boolean in the plurality of BRM signifies presence or absence of one of a plurality of syntactic features and a plurality of semantic features in the input program and can carry a TRUE or a FALSE value. Further the term relative in the plurality of BRM signifies presence of some syntactic constructs or semantic attributes beyond a respective threshold in the input program. It indicates if the specific syntactic feature in the input program is above or below an average number of occurrences of that syntactic feature in the training data on which the program verification strategy predictor has been trained. An average percentage occurrence of the syntactic feature of the plurality of syntactic features or the average percentage occurrences of the semantic feature of the plurality of semantic features is used as its threshold. The input program is control-flow intensive if a percentage control-flow statements in the input program are beyond an average percentage control-flow statements in the plurality of input programs of the training data. Consider the program1, the program1 has one control-flow statement out of a total of 11 program statements. Thus control-flow statements form 9% of the total statements. If this program is a part of the training data such that the control-flow statements on an average constitute 10% of the total program statements of the training data, then this program is not control-flow intensive. This metric is relative to the total number of statements in the program1 and the training data and can be represented using a Boolean value of whether the program is control-flow intensive or not.

The plurality of Boolean program features are quantifiable attributes used to capture and abstract specific syntactic and semantic attributes of the input program. A vector of the Boolean program features is called the plurality of Boolean feature vectors. For instance, if the plurality of Boolean program features like #loops to denote the total number of loops and max-loop-bound to represent an upper bound of the number of loop iterations for a given program, then the feature vector (#loops, max-loop-bound) evaluating to (2, 10) can summarize the characteristics of the input program loops. The plurality of Boolean program features and the corresponding the plurality of Boolean feature vectors abstracts those aspects of the input program that affect differential effectiveness of the plurality of program verification techniques in the portfolio. At the same time, the plurality of Boolean program features represents abstractions of a large class of input programs, so that the program verification strategy predictor trained using the plurality of Boolean program features generalizes well to a large class of input programs beyond those used for training.

A right set of the plurality of Boolean program features representing the input program can lead to better the plurality of strategy prediction models. This in turn can predict the privacy preserving program verification strategy closer to an optimal for the given input program with the plurality of property assertions, and consequently impact the effectiveness of the portfolio either positively or negatively. Existing strategy selection techniques use program-aware features and technique-aware features based on program syntax, semantics, and the known strengths and weaknesses of the plurality of program verification techniques. The program-aware features and technique-aware features are picked using existing literature on verification tools and techniques, and the knowledge of technique developers and users. For example, an effectiveness of any array abstraction technique has a positive correlation with modification of an array elements in loops. Therefore, incorporating this feature in the plurality of Boolean program features helps better predict the effectiveness of the array abstraction technique. The disclosed method uses Boolean relative metrics as features that represent known strengths and weaknesses of the portfolio such that they lead to better the plurality of strategy prediction models. These features are termed as portfolio-driven features or the plurality of PDBRM.

The Boolean program feature from among the plurality of Boolean program features is the portfolio driven feature, if it has a positive correlation with the success of at least one program verification technique $T_i$, and lacks a positive correlation with the success of at least one other program verification technique $T_j$, out of the N program verification techniques in the portfolio. This means that while the program verification technique $T_i$ may be able to verify the input program containing the PDBRM, at least one other program verification technique (such as $T_j$) is unlikely to do so. For instance, 'known-loopbound' feature indicates that BMC can verify the program1, while k-induction may not, making it the PDBRM.

If a feature is not a portfolio-driven feature, then it is a non-portfolio driven feature. So, the non-portfolio driven feature has a positive or a negative correlation with the success of the plurality of program verification techniques within the portfolio. The discriminative power of such features is weak. For instance, if the feature 'unused variables' is a strength of plurality of program verification techniques in the portfolio, then it is a non-portfolio driven feature and may not significantly impact the learning process in the SPRED.

The plurality of BRM, and the plurality of PDBRM are obfuscated for minimizing information leakage when communicating the plurality of Boolean program features during training or evaluation from the client to the strategy prediction service provider as the ML-as-a-service. The client here simply needs to present the plurality of Boolean feature vectors corresponding to one of the plurality of obfuscated BRM of the input program, and the plurality of Boolean feature vectors corresponding to the plurality of obfuscated PDBRM of the input program. The plurality of Boolean feature vectors is specifically recommended by the strategy prediction service provider and represent either the presence of the plurality of syntactic features or a plurality of semantic features in the input program, or whether a quantitative measure of the plurality of syntactic features or the plurality of semantic features exceeding a specified threshold. The threshold for quantitative measures is also specified by the strategy prediction service provider. If semantically diverse classes of programs can map to each combination of Boolean feature values corresponding to the plurality of Boolean program features, reverse engineering details of the plurality of semantic features of the input program from knowledge of the Boolean feature values is extremely difficult. It should be noted that even if the input program is not revealed to the strategy prediction service provider, the strategy prediction service provides knows the plurality of Boolean program features to be used.

If the plurality of Boolean program features like "size of the input program >100 lines", "loops present in the input program", "presence of branches in the input program", "are arithmetic operations used" thereof, and if test data has an abundance of plurality of feature vectors where all of these are 0, then there is information leakage that the client is using short loop-free programs without branches and without arithmetic operations. This information leakage can help, for instance, the client's competition to understand why the client's software is efficient and rarely fails. This kind of information leakage is unacceptable in the automotive and avionics industry involving high monetary stakes, and where the software, its efficiency, and verification are safety critical. To prevent the strategy prediction service provider from inferring any information at all about the input program for which strategies are predicted, a setting where the program verification strategy predictor is trained in a custom manner for the client. In this case, the client is allowed to obfuscate one of the plurality of BRM and the plurality of PDBRM before presenting to the program verification strategy predictor. The client permutes an n-dimensional Boolean feature vector before presenting to the program verification strategy predictor, where the permutation is known only to the client, in accordance with some embodiments of the present disclosure. In this case, there is no way for the program verification strategy predictor to infer the plurality of Boolean program features corresponding to the input program, unless the plurality of Boolean feature vector has all 0's or all 1's. To prevent loss of information even in these extreme cases, the client can use a dual-rail encoding technique for each of the Boolean program feature of the plurality of Boolean program features. For each of the Boolean program feature $i$, two Boolean variables $p_i$ and $n_i$ are set to 1 and 0 respectively if feature $i$ has the value 1. Similarly, $p_i$ is set to 0 and $n_i$ to 1 if feature $i$ has the value 0. This process doubles the number of Boolean inputs without increasing the number of latent features. Additionally, for the plurality of Boolean program features, every point in feature space is encoded by the Boolean vector of dimension 2n, with exactly n 1's and n 0's. If the dual-rail encoding is permuted, the permutation being known only to the client, before sending to the program verification strategy predictor, there is no way for the program verification strategy predictor to infer any information about the input program from which the Boolean feature vector of the plurality of Boolean feature vectors is derived. This is easy to prove since for every point $v$ in the feature space, and for every 2n - *dimensional* Boolean feature vector of the plurality of Boolean feature vectors $u$ with $n$ 1*'s* and $n$ 0*'s,* there exists the dual-rail encoding and a permutation that maps $v$ to $u$. This allows the client to send training data and evaluation data to the program verification strategy predictor, while revealing zero information about the plurality input programs.

The plurality of obfuscated BRM of the input program pertains to characteristics of the input program comprising (i) Boolean metrics, and (ii) Boolean relative metrics. The Boolean metrics represent presence or absence of one of (i) the plurality of syntactic features, and (ii) the plurality of semantic features in the input program. The Boolean relative metrics represents presence of the plurality of syntactic features and the plurality of semantic features beyond a computed threshold in the input program, and the computed threshold is an average of the number of occurrences of one of the (i) the plurality of syntactic features in the plurality of input programs of the training data.

The plurality of obfuscated PDBRM features is selected based on strengths and weaknesses of the plurality of program verification techniques for checking the plurality of property assertions in the input program.

Table.1 represents the plurality of obfuscated PDBRM derived from the plurality of program techniques in a VeriAbs's portfolio. The first row of Table.1 refers to the Boolean program feature of PDBRM "array element modified in loop". VeriAbs's array abstraction techniques of the plurality of program verification techniques positively correlate with this Boolean program feature of the plurality of obfuscated PRBRM and the loop abstraction techniques of the plurality of program verification techniques negatively correlate with this feature. Alternately, there are some features of the plurality of obfuscated PDBRM with which the plurality of program verification techniques in the portfolio correlates positively. Like a program which has a value zero for the Boolean program feature "if control-flow statements present in program" can be handled well by the plurality of program verification techniques. In this case, the order of the plurality of the program verification techniques in the program verification strategy does not matter, and any predicted privacy preserving program verification strategy will be acceptable. Hence in the proposed method such type of the Boolean program features of the plurality of Boolean program features are excluded from learning to avoid prioritization of one program verification technique over another program verification technique for such input programs.

Table.1

| PDBRM Feature | Correlated Techniques |
|---|---|
| **Loop Patterns** | |
| Array element modified in loop | Array pruning |
| Assigning constants in loop | Loop invariant generation |
| Known loop bound | BMC |

(continued)

| Control Flow Patterns | |
|---|---|
| Has nested loop | BMC |

Consider the portfolio comprising the plurality of program verification techniques $T_1,...,T_5$, and the plurality of obfuscated **PDBRM** $f_1,...,f_5$. The plurality of obfuscated PDBRM represent strengths which are correlate positively or weaknesses which are correlate negatively with the effectiveness of each of the plurality of program verification techniques $T_1,...,T_5$. Also, if the plurality of obfuscated PDBRM does not correlate negatively with the effectiveness of the program verification technique of the plurality of program verification techniques, then the plurality of obfuscated PDBRM is considered to correlate positively. Selection of the plurality of obfuscated PDBRM is based on a feature selection matrix, as shown in Table. 3.

Table. 2

| Program Verification Techniques | | | | | |
|---|---|---|---|---|---|
| PDBRM Feature | $T_1$ | $T_2$ | $T_3$ | $T_4$ | $T_5$ |
| $f_1$ | + | - | - | + | + |
| $f_2$ | - | - | - | - | - |
| $f_3$ | + | - | + | - | + |
| $f_4$ | + | + | + | + | + |
| $f_5$ | + | + | + | - | + |
| Positive correlation (+), Negative correlation (-) | | | | | |

Each cell in Table. 2 indicates whether the obfuscated PDBRM of the plurality of PDBRM correlates positively (+), or correlates negatively (-) with the effectiveness of the program verification technique of the plurality of program verification techniques in the corresponding column. It is observed from the Table. 2 the obfuscated PDBRM $f_4$ is a strength, while the obfuscated PDBRM $f_2$ is a weakness of the program verification techniques $T_1,...,T_5$ in the portfolio. The obfuscated PDBRM $f_2$ and $f_4$ do not help in ranking the plurality of program verification techniques, and hence do not contribute to the learning process, so disregarded. As a result, the obfuscated PDBRM $f_1$, $f_3$, and $f_5$ are identified and selected as the plurality of PDBRM. This is formally presented as follows. $F$ be the set of features of the portfolio collected from existing literature on the plurality of program verification techniques, and the developers and users of the plurality of program verification techniques. Let $F'$ be the plurality of obfuscated PDBRM, where $F' \subseteq F$. Let $s: F \times T \to \{1,0\}$ be a function returning 1 when the obfuscated PDBRM $f' \in F$ is a strength of the program verification technique $T_i \in T$, and 0 when the obfuscated PDBRM $f'$ is the weakness of the program verification technique $T_i$. Then selection of the plurality of obfuscated PDBRM satisfies the following constraint for every $f' \in F$:

$$(\forall T_i \in T, s(f', T_i) == 1) \vee (\forall T_i \in T, s(f', T_i) == 0) \implies f' \notin F \qquad (1)$$

At step 306 of the method 300, the one or more hardware processors are configured to train program verification strategy predictor by the strategy prediction service provider, using the plurality of obfuscated BRM, and the plurality of obfuscated PDBRM, to predict the privacy preserving program verification strategy for the program verification task, using one of a plurality of strategy prediction models in the SPRED architecture comprising (i) a Result Weighted Strategy Prediction (RWSP) BRM model, (ii) a RWSP PDBRM model, (iii) a Time Weighted Strategy Prediction (TWSP) BRM model, and (iv) a TWSP PDBRM model, based on the mode of execution. The strategy prediction service provider is hosted on the cloud in accordance with some embodiments of the present disclosure.

The program verification strategy predictor is a neural network (NN) with multi-class classification and categorical cross-entropy as a loss function for learning. The output of the program verification strategy predictor is a vector of normalized weights $W = \langle w_1,...,w_N \rangle$, $\sum_{i=1}^{N} w_i = 1$. Each weight $w_i$, is a measure of predicted effectiveness of each corresponding program verification technique of the plurality of program verification techniques $T_i \in T$ on the input program $P$. In the SPRED architecture, the privacy preserving program verification strategy is modelled as a ranking function $G$: $\{0,1\}^n \to T^N$, where $n$ is a plurality of obfuscated program features, and $N$ is the plurality of program verification techniques in the portfolio. The domain of the ranking function is the set to the possible feature vectors of the plurality of obfuscated program features, and the range is the plurality of program verification techniques for the given portfolio.

The privacy preserving program verification strategy *S,* for the program verification task, is an ordered set of the plurality of program verification techniques, where more effective program verification techniques are ranked higher than the program verification techniques with lower effectiveness. The program verification technique $T_i$ is more effective than another program verification technique $T_j$ if it can verify the input program *P* successfully while the program verification technique $T_j$ cannot verify successfully, or if the program verification technique $T_i$ needs lesser time than $T_j$ to verify the input program *P.* The plurality of program verification techniques that cannot verify the input program *P,* or can verify with same computational time are equally effective. The order of the equally effective plurality of program verification techniques within the privacy preserving program verification strategy is decided arbitrarily. It is important to note that relative effectiveness of the plurality of program verification techniques must always be interpreted in the context of specific parameters, such as computing platform, available memory, and timeout. The ordering is obtained by controlled measurements during training the program verification strategy predictor for a specific parameter set, and the trained program verification strategy predictor can be used to predict the order for an unseen program only when the same parameters are used for the privacy preserving program verification strategy. The disclosed method is parameter-agnostic and can be used for any parameter combination, in accordance with some embodiments of the present disclosure. However, prediction of the privacy preserving program verification strategy for the program verification task prediction is meaningful only when the same parameter combination is used during the training and the evaluation.

The program verification strategy predictor predicts a real-valued weight for each of the plurality of program verification techniques, and the plurality of program verification techniques with higher predicted weights are ranked higher. Thus, the program verification strategy predictor is modelled as a function which accepts the plurality of Boolean feature vectors *X* corresponding to the plurality of obfuscated program features, and implements the NN model to predict a plurality of weight vectors *W* indicating the effectiveness of the respective plurality of program verification techniques $T_i \in T$, to generate the privacy preserving program verification strategy S satisfying the following constraint:

$$T_i, T_j \ \in S, \forall \ w_i, w_i \ \in W, w_i > w_j \ \Longrightarrow \ T_i \prec T_j \qquad (2)$$

Here $T_i \prec T_j$ indicates that the program verification strategy predictor predicted that the program verification technique $T_i$ is at least as effective as the program verification technique $T_j$, thus the program verification technique $T_i$ precedes the program verification technique $T_j$ in the predicted privacy preserving program verification strategy *S.* It should be noted that $T_i \prec T_j$ does not necessarily mean that the program verification technique $T_i$ is at least as effective as the program verification technique $T_j$, instead it is just such a prediction by the program verification strategy predictor.

The program verification strategy predictor using the plurality of obfuscated BRM, and the plurality of obfuscated PDBRM predicts the privacy preserving program verification strategy for the program verification task, using one of the plurality of strategy prediction models in the SPRED architecture comprising (i) the Result Weighted Strategy Prediction (RWSP) BRM model, (ii) the RWSP PDBRM model, (iii) the Time Weighted Strategy Prediction (TWSP) BRM model, and (iv) the TWSP PDBRM model, based on the mode of execution.

The RWSP BRM model $M_1$ is trained as $M_1 : \{0,1\}^n \to 1 \text{-} hot(N)$, where n is the plurality of Boolean feature vectors corresponding to the plurality of obfuscated BRM of the input program, and *N* is the plurality of program verification techniques in the portfolio. The domain of the RWSP BRM model is the plurality of Boolean feature vectors corresponding to the plurality of obfuscated BRM of the input program. The range of output label of the RWSP BRM model is the set of all possible Boolean vectors of size *N* that are one-hot encoded. Each output label vector represents the most effective program verification technique in the portfolio *T* for the input program represented by the plurality of Boolean feature vectors X. The output label is one-hot encoded to represent the program verification technique $T_i, 1 \leq i \leq N,$ from the portfolio *T* that verified the input program in least amount of time. Thus, for the input program *P* represented by the plurality of Boolean feature vectors X, the RWSP BRM model *M*1 learns B given by,

$$M_1(X) = B \in 1 - hot(N) \qquad (3)$$

Where $b_i \in B$ is set to one when the program verification technique $T_i \in T$ solves the input program *P* represented by the plurality of Boolean feature vectors X in the least amount of time. If the program verification technique $T_i$ verify program P in time $t_i$ to produce result $R_i$, then,

$$b_i = \begin{cases} 1, & if \ R_i \ \neq U \wedge \forall \ T_k \in T, i \ \neq k \Rightarrow (R_k = U \vee t_i \leq t_k) \\ 0, & otherwise \end{cases} \qquad (4)$$

If multiple program verification techniques in the plurality of program verification techniques are found to verify the input program *P* in the same shortest amount of time during the training phase, one of those multiple program verification techniques is arbitrarily selected and its corresponding variable $b_i$ is set to 1 for output labelling during training. It is significant that although the RWSP BRM model using data in which the output for every input is one-hot encoded, when actually using the trained RWSP BRM model for the input program for prediction of the privacy preserving program verification strategy, the plurality of weight vectors is assigned by the trained RWSP BRM model to each program verification technique of the plurality of verification techniques in the portfolio and use these to obtain the privacy preserving program verification strategy which is an ordered sequence of the plurality of program verification techniques. Although the RWSP BRM model is trained using one-hot output labels, it is used to generate a ranked sequence of plurality of program verification techniques.

The prediction of the privacy preserving program verification strategy using the RWSP BRM model can be explained through an illustrative example. Consider the plurality of Boolean feature vectors, $X = (g, c, l, p, b)$. Here, $g$ be *TRUE* if the input program $P$ has global variables, $c$ be *TRUE* if the input program P has control-flow statements, $l$ stand for the presence of loops, $p$ for presence of pointers, and b for the presence of loops of known bounds. The valuation of plurality of Boolean feature vectors for the input program shown in the program 1is $X = (11101)$. Let there be three program verification techniques in the portfolio, BMC denoted by $B$, interval-analysis denoted by $I_a$, and symbolic execution denoted by $S_e$. A sample training data label for X is given by $Y = \langle (B, 1), (I_a, 0), (S_e, 1) \rangle$, or $Y = (101)$ for convenience, when the program verification techniques corresponding to the components of $Y$ are understood. The bits corresponding to the BMC and the symbolic execution are set to TRUE since they can verify the input program $P$, while the interval analysis cannot verify the input program $P$. Accordingly, one way to label the input with the corresponding output for training can be as follows: {(11101,101)}.

However, the labelling is one-hot encoded based on the time taken by each of the program verification techniques to verify the input program. Let the BMC take 0.5 seconds, and the symbolic execution 0.4 seconds to verify the input program. Consequently, the training data for this input program will be given by {(11101,001)}. Since the symbolic execution is the fastest technique, only the bit corresponding to it is set to TRUE. The prediction by the RWSP BRM model for the same input program is as follows: $Y^1 = \langle (B, 0.3), (I_a, 0.2), (S_e, 0.5) \rangle$. Then the predicted privacy preserving program verification strategy is $(S_e, B, I_a)$ based on the plurality of weight vectors.

The RWSP BRM model is trained with a labelled training data comprising the plurality of Boolean feature vectors corresponding to the plurality of obfuscated BRM of the input program, and the verification technique from the portfolio that can verify the input program in a least amount of time compared to the other verification techniques in the portfolio, to generate the trained RWSP BRM model. Similarly, the RWSP PDBRM model $M_2$ is trained with the labelled training data comprising the plurality of Boolean feature vectors corresponding to the plurality of obfuscated PDBRM of the input program, and the verification technique from the portfolio that can verify the input program in the least amount of time compared to other verification techniques in the portfolio, to generate the trained RWSP PDBRM model.

The privacy preserving program verification strategy for the program verification task is predicted using the RWSP BRM model by:

(a) Obfuscating the plurality of BRM, using the obfuscating technique, to generate the plurality of obfuscated BRM.
(b) Feeding the plurality of Boolean feature vectors corresponding to the plurality of obfuscated BRM to the RWSP BRM model.
(c) Predicting, by the RWSP BRM model, an associated likelihood of success of each of the plurality of program verification techniques to perform the program verification task.
(d) Ranking the plurality of program verification techniques in decreasing order based on the predicted likelihood of success of the plurality of program verification techniques, to generate a plurality of prioritized sequence of program verification techniques, for performing the program verification task, wherein the ranking sorts the plurality of program verification techniques in decreasing order of effectiveness towards verifying the program verification task.
(e) Generating the privacy preserving program verification strategy based on the plurality of sorted program verification techniques.

The privacy preserving program verification strategy for the program verification task is predicted using the RWSP PDBRM model by:

(a) Obfuscating the plurality of PDBRM, using the obfuscating technique, to generate the plurality of obfuscated PDBRM.
(b) Feeding the plurality of Boolean feature vectors corresponding to the plurality of obfuscated PDBRM to the RWSP PDBRM model.
(c) Predicting, by the RWSP PDBRM model, the associated likelihood of success of each of the plurality of program verification techniques to perform the program verification task.
(d) Ranking the plurality of program verification techniques in decreasing order based on the predicted likelihood of success of the plurality of program verification techniques, to generate a plurality of prioritized sequence of program verification techniques for performing the program verification task, wherein the ranking sorts the plurality of program verification techniques in decreasing order of effectiveness towards verifying the program verification task.

(e) Generating the privacy preserving program verification strategy based on the plurality of sorted program verification techniques.

The TWSP BRM model is trained as $M_3: \{0,1\}^n \rightarrow R^N$, where n is the plurality of Boolean feature vectors corresponding to the plurality of obfuscated BRM of the input program, and $N$ is the plurality of program verification techniques in the portfolio. The domain of the TWSP BRM model is the plurality of Boolean feature vectors corresponding to the plurality of obfuscated BRM of the input program. The range of output label of the TWSP BRM model is set to the plurality of weight vectors that can be assigned to the plurality of program verification techniques in the portfolio. Each weight vector $W$ has weights $w_i \in W$ that represent the effectiveness of the plurality of program verification techniques $T_i \in T$, for the input program $P$ represented by the plurality of Boolean feature vectors X. The weights $w_i$ are normalized as a function of $t_i$, time taken by each program verification technique $T_i$ of the plurality of verification techniques to verify the input program $P$, given by:

$$M_3(X) = W = \langle w_1, \ldots, w_N \rangle, w_i = \frac{\theta}{t_i} \qquad (5)$$

Here $\theta$ is a normalizing constant. If $T_i$ cannot verify the input program $P$, then $t_i = \infty$. To compute the plurality of weight vectors $w_i$, variable $\theta$ is computed for the given input program $P$.

In the illustrative example, the BMC takes 0.5 seconds to verify the input program, and symbolic execution takes 0.4 seconds to verify the input program. The training data using the TWSP model is be given by $\{(11101, \langle \frac{\theta}{0.5}, \frac{\theta}{\infty}, \frac{\theta}{0.4}, \rangle)\}$, such that $\frac{\theta}{0.5} + 0 + \frac{\theta}{0.4} = 1$. Considering the privacy preserving setting, the client is free to choose the value of $\theta$ so that the values of the plurality of Boolean relative metrics lie between 0 and 1, and is allowed to permute the plurality of Boolean program features as per choice.

The TWSP BRM model is trained with the labelled training data comprising the plurality of Boolean feature vectors corresponding to the plurality of obfuscated BRM of the input program, and a plurality of weight vectors assigned to the plurality of program verification techniques in the portfolio, to generate the trained TWSP BRM model, The TWSP PDBRM model is trained with the labelled training data comprising the plurality of Boolean feature vectors corresponding to the plurality of obfuscated PDBRM of the input program and the plurality of weight vectors assigned to the plurality of program verification techniques in the portfolio to generate the trained TWSP PDBRM model.

The privacy preserving program verification strategy for the program verification task is predicted using the TWSP BRM model by:

(a) Obfuscating the plurality of BRM, using the obfuscating technique, to generate the plurality of obfuscated BRM.
(b) Feeding the plurality of Boolean feature vectors corresponding to the plurality of obfuscated BRM to the TWSP BRM model.
(c) Predicting, by the TWSP BRM model, a plurality of normalized weighed vectors corresponding to the plurality of program verification techniques, wherein each of the plurality of normalized weighted vectors corresponds to a relative effectiveness of the associated verification technique of the plurality of program verification techniques, and wherein the relative effectiveness of each of the verification technique of the plurality of program verification techniques is predicted based on time taken to perform the program verification task.
(d) Ranking the plurality of program verification techniques in decreasing order based on the predicted plurality of normalized weighted vectors to generate a plurality of prioritized sequence of program verification techniques, wherein the ranking sorts the plurality of program verification techniques in decreasing order of effectiveness towards verifying the program verification task.
(e) Generating the verification strategy based on the plurality of sorted program verification techniques.

The privacy preserving program verification strategy for the program verification task is predicted using the TWSP PDBRM model by:

(a) Obfuscating the plurality of PDBRM, using the obfuscating technique, to generate the plurality of obfuscated PDBRM.
(b) Feeding the plurality of Boolean feature vectors corresponding to the plurality of obfuscated PDBRM to the TWSP PDBRM model.
(c) Predicting, by the TWSP PDBRM model, a plurality of normalized weighed vectors corresponding to the plurality of program verification techniques, wherein each of the plurality of normalized weighted vectors corresponds to a relative effectiveness of the associated verification technique of the plurality of program verification techniques, and wherein the relative effectiveness of each of the verification technique of the plurality of program verification techniques is predicted based on time taken to perform the program verification task.

(d) Ranking the plurality of program verification techniques in decreasing order based on the predicted plurality of normalized weighed vectors to generate a plurality of sorted program verification techniques, wherein the ranking sorts the plurality of program verification techniques in decreasing order of effectiveness towards verifying the program verification task.

(e) Generating the verification strategy based on the plurality of sorted program verification techniques.

The plurality of sorted program verification techniques in the privacy preserving program verification strategy are applied on the program verification task in sequence until one of (i) the program verification task is completed, and (ii) a predefined time allocated for each of the program verification technique of the plurality of sorted program verification techniques is exceeded. For the privacy preserving program verification strategy if the plurality of property assertions in the program verification task holds true, a verification result is considered safe (S). For the privacy preserving program verification strategy if at least one of the property assertions in the plurality of property assertions in the program verification task fails, the program verification task deems unsafe, and the verification result is considered as failure (F). The verification result is considered as unknown (U) if the program verification task is not verified by the privacy preserving program verification strategy.

The program verification strategy predictor, during inferencing stage, predicts the privacy preserving program verification strategy for the program verification task using the plurality of Boolean feature vectors.

## Experimental Results

Through experimentation, the proposed method aims to validate the following research questions. **RQ1:** Can the disclosed training methodology give better results than manually crafted strategies? **RQ2:** Can Boolean features that provide binary abstraction of program characteristics lead to comparable or better prediction performance than rational features? **RQ3:** Can systematically engineered portfolio-driven features give better results than a zoo of manually derived technique- and program-aware features?

The primary objective of the experimentation is to determine whether training with a limited dataset, and employing Boolean features denoting either positive correlation or negative correlation with the plurality of program verification techniques in the portfolio can yield the efficient privacy preserving program verification strategy while preserving privacy, and ultimately leading to an enhanced ability to verify an increased number of the plurality of input programs. Additionally, the experimentation investigates whether considering verification time in training also leads to the verification of an increased number of the plurality of input programs and/or a reduction in the time required to verify the plurality of input programs.

For experiments a ReachSafety benchmarks from SV-COMP is used which are meant for reachability verification. They constitute of a diverse set of 5400 C programs, each encoded with verification properties. Out of these, 3194 programs satisfy the encoded properties and 2206 violate one or more encoded properties. These benchmarks are classified into 12 categories: Arrays, BitVectors, Combinations, ControlFlow, ECA, Floats, Heap, Loops, ProductLines, Recursive, Sequentialized, and XCSP. These ReachSafety benchmarks have been contributed by researchers and practitioners globally. This benchmark suite is treated as a black-box for the experiments of the disclosed method.

For experiments, the disclosed method simulates a client-service environment. In this setup, the client decides the size of the training data. A team member (the client) randomly selects a sample of the ReachSafety benchmarks of a decided size and execute each of the plurality of program verification techniques on each benchmark to form output labels for the training data, allowing a maximum of 900 seconds per each of the program verification technique of the plurality of program verification techniques. A plurality of Boolean feature vectors is generated for each benchmark and uniformly reordered the plurality of Boolean program features in each Boolean feature vector to obfuscate the plurality of Boolean feature vectors. The training data is created using the plurality of Boolean feature vectors and the corresponding output labels. This training data is passed to another team member (the service). This training data did not contain the names of the benchmarks, the plurality of Boolean program features, or the plurality of program verification techniques, or the order of the plurality of Boolean program features or the plurality of program verification techniques.

From this training data the service is designed and trained the program verification strategy predictor and hosted it on the cloud for actual execution or evaluation of the program verification strategy predictor by the client. This way the service was fully unaware of the randomly selected benchmarks, or the order of the plurality of Boolean program features or the plurality of program verification techniques. The service trains program verification strategy predictor which is a fully connected symmetric NN as opposed to other NN architectures because the disclosed method attempts predicting the privacy preserving program verification strategy vector encoding of the plurality of Boolean program features is unknown.

The service then hosts the trained program verification strategy predictor on the cloud. The client uses the trained program verification strategy predictor from the cloud and for each output of the program verification strategy predictor, client maps the plurality of weight vectors generated by the program verification strategy predictor to the corresponding plurality of program verification techniques to create the privacy preserving program verification strategy for each benchmark. The training data collection process is fully automated, by employing a utility that randomly picks benchmarks, creates the plurality of Boolean feature vectors, and generates output labels for each benchmark. In the industrial context, all that is required is for the client to execute this utility for extracting the training data. In the experiments, the client used 746 ReachSafety benchmarks as the training data and the SPRED architecture is tested on remaining 4654 benchmarks. This gives the training data to test data ratio of 14:86.

The experiments were executed using 20 virtual processing units with Ubuntu 20.04 LTS and 64 GB RAM, allowing up to 900 seconds per the input program (matching SV-COMP's timeout). The SPRED architecture uses VeriAbs's portfolio of verification techniques and applies program slicing as a pre-processing step, mirroring VeriAbs for a fair comparison.

The plurality of plurality of Boolean feature vectors are generated for a plurality of rational features, the plurality of BRM, the plurality of PDBRM, using the static analysis tools. The plurality of rational features are technique-aware empirical source code metrics such as ratios of syntactically bounded loops to the total number of loops, branching counts, and thereof. Each of the plurality rational feature can be an integer or a rational. The plurality of BRM are Boolean counterparts of the plurality of rational features computed and expressed in the Boolean form. The plurality of PDBRM are Boolean portfolio-driven features created using the systematic approach.

For experimentation four fully connected NNs are trained of which three correspond to the plurality of rational features, the plurality of BRM, and the plurality of PDBRM features input to the Verifolio, the RWSP BRM model, and the RWSP PDBRM, respectively. The fourth model corresponds to the plurality of PDBRM input to the TWSP PDBRM model.

The four trained fully connected NN models each consist of four layers: an input layer with neurons equal to the number of respective features, two hidden layers with half the neurons of the previous layer, and an output layer with 11 neurons representing the plurality of program verification techniques. The total number of neurons in the hidden layers is less than the total number of neurons in the input and output layers to prevent underfitting and overfitting. Also, such the fully-connected NN models helps in predicting the privacy preserving program verification strategy. Here, the loss function is categorical cross-entropy, and the output layer uses the softmax activation function for multiclass classification. This NN design is characterized by its compact size and is trained on the limited dataset, which enables exceptionally fast training. Such speed is essential in an industrial context where the demand for rapid software verification is critical to meet project deadlines and ensure software quality.

To train the RWSP BRM model, and the RWSP PDBRM model each output label of the training data represents the fastest program verification technique of the plurality of program verification techniques that successfully verified the respective benchmark in the training data. Thus, the training data consists of 2-tuples, each containing the Boolean feature vector and the fastest successfully verifying program verification technique. To train the TWSP PDBRM model, the plurality of weight vectors is assigned to each of the program verification techniques in the portfolio for each benchmark in the training data. The highest weight is given to the program verification technique which successfully verifies the given benchmark in the least amount of time. Unsuccessful program verification techniques from the among the plurality of program verification techniques are assigned a weight of zero. Consequently, the training data for the TWSP PDBRM model consists of tuples containing the plurality of Boolean feature vectors, and the plurality of weight vectors for the plurality of program verification technique in the portfolio as output labels.

The disclosed method evaluates the performance of the NN models and manual program verification strategy selection with respect to normalized accuracy (NACC). The normalized accuracy of a verifier v is the ratio of the plurality of input programs verified by v, and the plurality of the input programs verified by a virtual best solver using the portfolio of v (VBSv). The virtual best solver would predict the privacy preserving program verification strategies in which the first program verification technique of the plurality of program verification techniques verifies the input program, if possible, for the portfolio. Thus, VBSv can verify as many as the plurality of programs that can be solved by the VeriAbs's portfolio.

$$NACCv \ = \ \#(programs \ verified \ successfully \ by \ v)/$$

$$\#(programs \ successfully \ verified \ by \ VBSv).$$

The disclosed method evaluates the four NN models training and test data, disjoint from benchmarks selected for the training, and includes 4654 ReachSafety benchmarks. The results are presented in Table. 3.

Table. 3

| Approach | #Verified Programs | % Verified programs | NAcc | Improvement | Time (Hours) |
|---|---|---|---|---|---|
| VeriAbs | 3555 | 76.4 | 90 | - | 495 |
| Random Strategy Selection Approach | 3025 | 65 | 76.1 | -13.9 | 584 |
| RWSP PDBRM | 3867 | **83.1** | **97.6** | **7.6** | **451** |
| TWSP PDBRM | 3858 | 82.9 | 97.4 | 7.4 | 456 |
| RWSP BRM | 3797 | 81.6 | 96 | 6 | 469 |
| Verifolio | 3741 | 80.4 | 94.9 | 4.9 | 474 |

In the second column of Table.3, the number of programs correctly verified by each of the NN models is provided. These are the plurality of input programs in which the SPRED accurately determines whether the input program satisfies the encoded property assertions or violates them. The third column shows the plurality of input programs verified by the respective NN model in percentage. The fourth column indicates NACC and fifth column showcases the improvement in the NACC of each of the NN model for the prediction of the privacy preserving program verification strategy compared to the VeriAbs, the manual strategy selector. The last column presents the total verification time taken by each of the NN model on the entire test data set.

RQ1: Can strategies predicted by SPRED outperform manually crafted strategies? To investigate RQ1, the disclosed method compare the SPRED utilizing the RWSP PDBRM model, with two non-ML strategy selection methods: VeriAbs ("M. Afzal, A. Asia, A. Chauhan, B. Chimdyalwar, P. Darke, A. Datar, S. Kumar, and R Venkatesh. VeriAbs: Verification by Abstraction and Test Generation. In ASE, pages 1138-1141, 2019."), which employs four predefined strategies, and a random strategy selection approach. All three methods were evaluated, and the results are shown in the first three rows of Table 3. The SPRED utilizing the RWSP PDBRM model outperformed the other NN models by achieving higher program verification accuracy in a shorter execution time. Unlike the VeriAbs, the SPRED utilizing the RWSP PDBRM model learns from a larger strategy space, accommodating up to $N!$ strategies, where $N$ is number of program verification techniques in the portfolio. Moreover, the SPRED utilizing the RWSP PDBRM model can classify the plurality of input programs using the plurality of Boolean program features, encompassing up to $2^n$ categories of the plurality of input programs, where n is the plurality of Boolean program features. This enables the SPRED utilizing the RWSP PDBRM model to verify more input programs successfully and report better normalized accuracy than the VeriAbs. Additionally, second row in Table. 3 indicates that the random selection approach is not useful, and systematic approach is needed for effective prediction of the privacy preserving program verification strategy. The VeriAbs won the ReachSafety category at SV-COMP 2022. Surpassing VeriAbs is a significant achievement. When comparing the VeriAbs and the SPRED utilizing the RWSP PDBRM model, the RWSP BRM, the TWSP PDBRM some key observations include: (1) 84% of the plurality of input programs verified by the SPRED use one of the top-three techniques predicted by the SPRED architecture, saving 1.8 days of execution time compared to the VeriAbs. (2) SPRED verified 6.7% (312) more programs than VeriAbs. The SPRED verified 461 programs for which the VeriAbs ran out of time due to the selection of ineffective program verification strategies. The VeriAbs verified 149 input programs that SPRED could not. These input programs required techniques that were not present as output labels in the randomly selected training data, causing the SPRED to never predict them early in a strategy. Consequently, less effective techniques were prioritized, resulting in timeouts. Despite being trained on a small subset of the benchmarks, the SPRED approach improved automatic strategy prediction, outperforming manual strategy selection by achieving higher verification accuracy and the reduced execution time.

RQ2: Can simple Boolean features give better results than rational features? To investigate RQ2, both rational features are implemented as defined in Verifolio model and their corresponding Boolean counterparts called BRM. Two NN models are trained, namely the Verifolio and the RWSP BRM, using the same NN architecture. The results are represented in the last two rows of Table. 3. It is observed that the RWSP BRM model outperformed the Verifolio model reporting better normalized accuracy. Interesting observations identified from this include: (1) the RWSP BRM model predicted more effective strategies, leading to the successful verification of an additional 56 programs and saving 5 hours of execution time. (2) These additional programs could not be verified within the given time frame using the Verifolio model, since it predicted useful techniques later in the corresponding strategies. Hence Boolean features can aid verification accuracy better than rational features.

RQ3: Can systematically engineered portfolio-aware features give better results than a zoo of manually derived technique-aware features? To investigate RQ3 two ablation studies are performed. A study on RWSP BRM model is conducted using a zoo of technique-aware features to examine the impact of non-portfolio driven features on learning. For this, two models are compared. The first was the RWSP BRM model, and the second one was a NON-PORT BRM NN.

NON-PORT BRM NN uses all features of the RWSP BRM model except the non-portfolio driven features. Unused variables, file descriptors, and integer-type variables are the non-portfolio driven features which were either strengths or weaknesses of the plurality program verification techniques in the SPRED. The RWSP BRM model and the NON-PORT BRM NN are evaluated on the test data and found that the NON-PORT BRM NN verified 15 additional benchmarks and required 9 hours less to verify all the plurality of input programs compared to the RWSP BRM NN. These results indicate that excluding non-portfolio driven features improves the efficiency and effectiveness of the RWSP BRM model, supporting the notion that these features may not be useful for learning effective program verification strategies.

The second ablation study is conducted on the RWSP BRM model to examine the impact of portfolio-driven features on learning. For this, the performance of the RWSP BRM model and PORT-BRM NN are compared. The PORT-BRM NN was trained with all features of the RWSP BRM model except five randomly selected portfolio-driven features. The excluded features indicated control flow, array indices, linear operations, and constant assignments. Both models are evaluated on the test data and found that PORT-BRM NN verified 31 fewer benchmarks and took an additional 2.6 days compared to the RWSP BRM model. This indicates that removing portfolio-driven features decreased the effectiveness of the RWSP BRM model in terms of verification accuracy and yielded time-consuming strategies. Hence systematically engineered portfolio-aware features can enhance learning, leading to better accuracy and efficiency.

To evaluate the impact of the verification time of the plurality of program verification techniques on learning, a study is conducted using two NN models that utilized the plurality of PDBRM as input. The first NN is the RWSP PDBRM model and the second NN model is the TWSP PDBRM model. The results in Table. 3 clearly indicate that the RWSP PDBRM model outperformed the TWSP PDBRM model in terms of normalized accuracy. Additionally, the RWSP PDBRM model also demonstrated a 5-hour reduction in the execution time. Furthermore, 16 independent executions are conducted for the RWSP PDBRM model and the TWSP PDBRM model, involving random selection of the training data and execution on the test data. Consistently across these executions, it is observed that the RWSP PDBRM model yielded superior results. The RWSP PDBRM model, which employs the most effective program verification technique as the output label, can predict more effective and efficient privacy preserving program verification strategies than the TWSP PDBRM model learning model.

The SPRED utilizes VeriAbs's portfolio for predicting privacy preserving program verification strategy. VeriAbs is a reachability verifier that is used to verify properties encoded as assertions in C programs. The VeriAbs's portfolio includes (a) model checking techniques - bounded model checking and explicit state model checking (ESMC) (b) array abstraction techniques - array pruning, loop shrinking and full program induction (c) loop abstraction techniques (d) loop invariant generation techniques (e) loop summarization, (f) k-path interval analysis. and (g) k-induction.

Table. 4 gives the exhaustive list of the plurality of PDBRM utilized by the SPRED.

Table. 4

| PDBRM | Correlated Techniques |
|---|---|
| Loop Patterns | |
| Array element modified in loop | Loop shrinking, Array pruning, Full program Induction |
| Constant assignments in loop | Loop abstraction |
| Linearly accelerated variables in loop<br>Linear operations above threshold in loop<br>All variables in a loop are self-recurrent<br>Variables in loop are mutually dependent<br>Non-linear operations in loop<br>Non-linear operations above threshold in loop | Loop abstraction, Loop invariant generation, Loop summarization |
| Loop bound is 100<br>Statically loop bound is known<br>Loop has infinite bound | BMC, k-path interval analysis |
| **Intensive Control Flow** | |
| No loops in program<br>Program has loops | ESMC, BMC |
| Program has nested loop | |
| Recursive program | BMC |
| Control statements above threshold in program | ESMC |

(continued)

| Intensive Control Flow | |
|---|---|
| goto-labels in program | k-induction |

The ReachSafety benchmarks are evaluated using three NN models trained: Verifolio (RM NN), the RWSP BRM model, and the RWSP PDBRM model. The results showed that the RWSP PDBRM model performed better than the other models, aswell as VeriAbs and the random strategy prediction model.

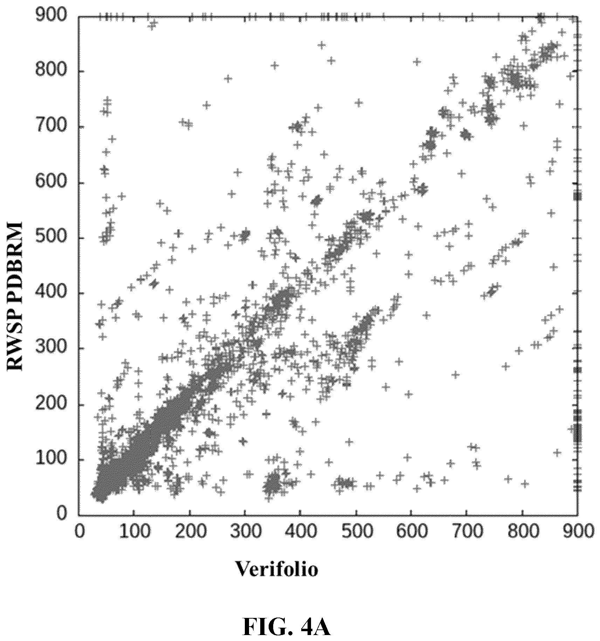

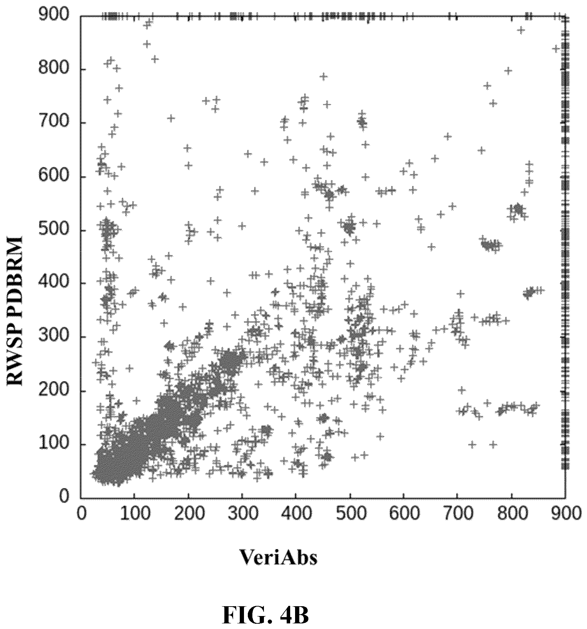

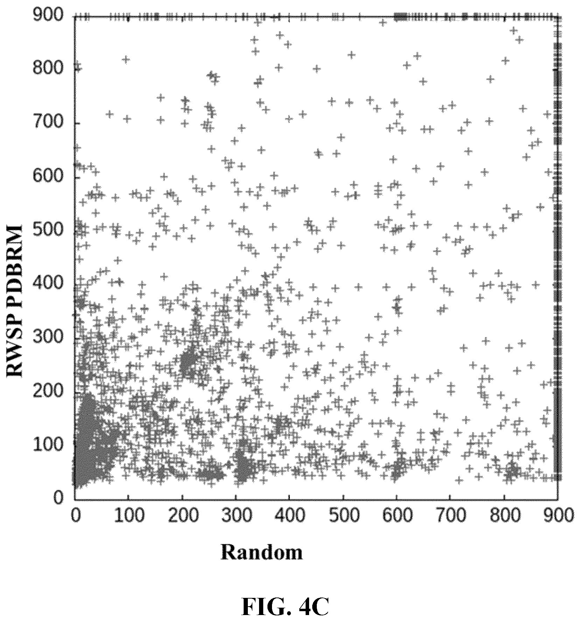

FIGS. 4A, 4B, and 4C depict a graphical performance comparison of the RWSP PDBRM model versus the Verifolio, the VeriAbs, and the Random Strategy Selection Approach respectively, in accordance with some embodiments of the present disclosure. Each data point on graphs signifies the time taken by the compared NN models along x and y axes to verify the input program. The data point's proximity to the x axis relative to the y axis indicates the superior performance of the model represented by the y axis, as it verifies the input program in less time, and vice versa. FIGS. 4A, 4B, and 4C more specifically present compelling evidence supporting the superior performance of the RWSP PDBRM model. It demonstrates a clear trend where most data points are positioned closer to the x-axis rather than the y-axis, indicating the effectiveness of the RWSP PDBRM model. Furthermore, the graphs illustrate instances where the SPRED failed to verify a significant number of program verification tasks within the allotted time when not using the plurality of PDBRM, whereas the RWSP PDBRM model successfully handled those tasks.

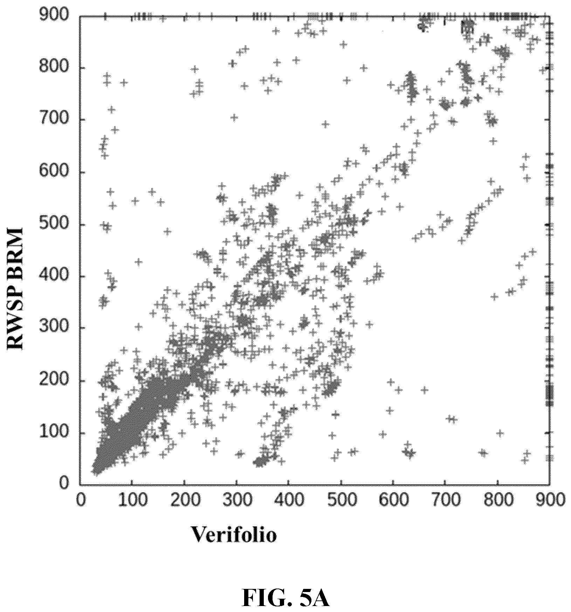

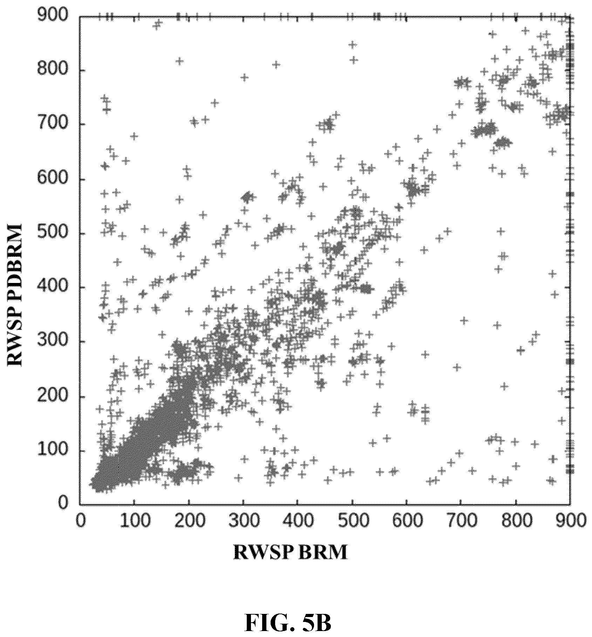

FIGS. 5A, and 5B, depict a graphical performance comparison of the RWSP BRM model versus a Verifolio, and the RWSP PDBRM respectively, in accordance with some embodiments of the present disclosure. More specifically FIGS. 5A, and 5B depict a relatively lower occurrence of the SPRED running out of time. However, most of the data points still lie closer to the x-axis, indicating the superiority of the plurality BRM features over RM features, and the plurality of PDBRM features over plurality of BRM features, respectively.

The disclosed method is designed the privacy preserving program verification strategy for the program verification task while minimizing information leakage about code in the input program. The privacy preserving program verification is presented with limited training data to satisfy the needs of software verification in an industrial setting. The systematic selection of the plurality of Boolean program features using the knowledge of the program verification techniques in the portfolio and Boolean representation from which the input program information cannot be derived. The plurality of Boolean program features comprises two types of features (a) a plurality of BRM, and (b) a plurality of PDBRM. The extensive evaluation of the SPRED on 5400 benchmark revealed key findings: (1) The NN models of the SPRED outperformed manual strategies. (2) Boolean representation of features of the input program which preserves code privacy simplified learning and led to an improved accuracy with reduced execution time. (3) the PDBRM consistently yielded good results across the NN models. In summary, the systematic approach to the selection of the PDBRM and its Boolean representation enabled the prediction of the privacy preserving program verification strategy.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of predicting the privacy preserving verification strategy of the input program using the plurality of BRM and the plurality of PDBRM. Embodiments herein provide a method and system for a privacy preserving verification strategy prediction of an input program using Boolean relative metrics, in accordance with some embodiments of the present disclosure. The disclosed method predicts the privacy preserving verification strategy from abstract program features that do not reveal useful information about semantics of an input program. Given the challenges of training and using a program verification strategy predictor in a setting of limited trust, the disclosed method uses obfuscated Boolean features of the programs. Boolean feature vectors of the training and evaluation data can be extracted and obfuscated at the client's end before sharing them with the team training and maintaining the program verification strategy predictor. The method extracts Boolean feature vectors from a small randomly chosen subset from which program information cannot be derived, acting as training data, of the client's code. The use of Boolean features helps in training the ML model with limited data.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (300) for program verification strategy prediction, the method comprising:

   receiving (302), via one or more hardware processors, a program verification task comprising (i) an input program from among a plurality of input programs, and (ii) a plurality of property assertions to be verified for the input program, a portfolio comprising a plurality of program verification techniques, and a mode of execution;
   extracting (304), via the one or more hardware processors, a plurality of Boolean program features from the input program based on the mode of execution, wherein the plurality of Boolean program features comprises one of (i) a plurality of Boolean Relative Metrics (BRM), and (ii) a plurality of Portfolio Driven Boolean Relative Metrics (PDBRM); and
   training (306), via the one or more hardware processors, a program verification strategy predictor by a strategy prediction service provider, using a plurality of obfuscated BRM corresponding to the plurality of BRM, and a plurality of obfuscated PDBRM corresponding to the plurality of PRBRM, to predict a privacy preserving program verification strategy for the program verification task, using one of a plurality of strategy prediction models in a privacy preserving Strategy Prediction (SPRED) architecture comprising (i) a Result Weighted Strategy Prediction (RWSP) BRM model, (ii) a RWSP PDBRM model, (iii) a Time Weighted Strategy Prediction (TWSP) BRM model, and (iv) a TWSP PDBRM model.

2. The processor implemented method as claimed in claim 1,

   wherein the program verification strategy predictor, during inferencing stage, predicts the privacy preserving program verification strategy for the program verification task using a plurality of Boolean feature vectors, wherein the mode of execution comprises selection of one of strategy prediction model from among (i) a RWSP BRM model, (ii) a RWSP PDBRM model, (iii) a TWSP BRM model, and (iv) a TWSP PDBRM model, for the program verification task,

wherein the plurality of obfuscated BRM of the input program pertains to characteristics of the input program comprising (i) Boolean metrics, and (ii) Boolean relative metrics, wherein the Boolean metrics represents presence or absence of one of (i) a plurality of syntactic features, and (ii) a plurality of semantic features in the input program,

wherein the Boolean relative metrics represents presence of the plurality of syntactic features and the plurality of semantic features beyond a computed threshold in the input program,

wherein the computed threshold is an average of the number of occurrences of one of the (i) the plurality of syntactic features, and (ii) the plurality of semantic features in the plurality of input programs of the training data, and

wherein the plurality of obfuscated PDBRM features is selected based on strengths and weaknesses of the plurality of program verification techniques for checking the plurality of property assertions in the input program.

3. The processor implemented method as claimed in claim 1,

wherein the RWSP BRM model is trained with a labelled training data comprising the plurality of Boolean feature vectors corresponding to the plurality of obfuscated BRM of the input program, and the plurality of program verification techniques from the portfolio that can verify the input program in a least amount of time compared to the other verification techniques in the portfolio, to generate a trained RWSP BRM model,

wherein the RWSP PDBRM model is trained with the labelled training data comprising the plurality of Boolean feature vectors corresponding to the plurality of obfuscated PDBRM of the input program, and the plurality of program verification techniques from the portfolio that can verify the input program in the least amount of time compared to other verification techniques in the portfolio, to generate a trained RWSP PDBRM model,

wherein the TWSP BRM model is trained with the labelled training data comprising the plurality of Boolean feature vectors corresponding to the plurality of obfuscated BRM of the input program, and a plurality of weight vectors assigned to the plurality of program verification techniques in the portfolio, to generate a trained TWSP BRM model, and

wherein the TWSP PDBRM model is trained with the labelled training data comprising the plurality of Boolean feature vectors corresponding to the plurality of obfuscated PDBRM of the input program and the plurality of weight vectors assigned to the plurality of program verification techniques in the portfolio to generate a trained TWSP PDBRM model.

4. The processor implemented method as claimed in claim 1, wherein the privacy preserving program verification strategy for the program verification task is predicted using the RWSP BRM model by:

(a) obfuscating the plurality of BRM, using an obfuscating technique, to generate the plurality of obfuscated BRM;
(b) feeding the plurality of Boolean feature vectors corresponding to the plurality of obfuscated BRM to the RWSP BRM model;
(c) predicting, by the RWSP BRM model, an associated likelihood of success of each of the plurality of program verification techniques to perform the program verification task;
(d) ranking the plurality of program verification techniques in decreasing order based on the predicted likelihood of success of the plurality of program verification techniques, to generate a plurality of prioritized sequence of program verification techniques, for performing the program verification task, wherein the ranking sorts the plurality of program verification techniques in decreasing order of effectiveness towards verifying the program verification task; and
(e) generating the privacy preserving program verification strategy based on the plurality of sorted program verification techniques,

wherein the privacy preserving program verification strategy for the program verification task is predicted using the RWSP PDBRM model by:

(a) obfuscating the plurality of PDBRM, using the obfuscating technique, to generate the plurality of obfuscated PDBRM;
(b) feeding the plurality of Boolean feature vectors corresponding to the plurality of obfuscated PDBRM to the RWSP PDBRM model;
(c) predicting, by the RWSP PDBRM model, the associated likelihood of success of each of the plurality of program verification techniques to perform the program verification task;

(d) ranking the plurality of program verification techniques in decreasing order based on the predicted likelihood of success of the plurality of program verification techniques, to generate a plurality of prioritized sequence of program verification techniques for performing the program verification task, wherein the ranking sorts the plurality of program verification techniques in decreasing order of effectiveness towards verifying the program verification task; and

(e) generating the privacy preserving program verification strategy based on the plurality of sorted program verification techniques,

wherein the privacy preserving program verification strategy for the program verification task is predicted using the TWSP BRM model by:

> (a) obfuscating the plurality of BRM, using an obfuscating technique, to generate the plurality of obfuscated BRM;
> (b) feeding the plurality of Boolean feature vectors corresponding to the plurality of obfuscated BRM to the TWSP BRM model;
> (c) predicting, by the TWSP BRM model, a plurality of normalized weighted vectors corresponding to the plurality of program verification techniques, wherein each of the plurality of normalized weighted vectors corresponds to a relative effectiveness of the associated verification technique of the plurality of program verification techniques, and wherein the relative effectiveness of each of the verification technique of the plurality of program verification techniques is predicted based on time taken to perform the program verification task;
> (d) ranking the plurality of program verification techniques in decreasing order based on the predicted plurality of normalized weighted vectors to generate a plurality of prioritized sequence of program verification techniques, wherein the ranking sorts the plurality of program verification techniques in decreasing order of effectiveness towards verifying the program verification task; and
> (e) generating the privacy preserving program verification strategy based on the plurality of sorted program verification techniques, and

wherein the privacy preserving program verification strategy for the program verification task is predicted using the TWSP PDBRM model by:

> (a) obfuscating the plurality of PDBRM, using an obfuscating technique, to generate the plurality of obfuscated PDBRM;
> (b) feeding the plurality of Boolean feature vectors corresponding to the plurality of obfuscated PDBRM to the TWSP PDBRM model;
> (c) predicting, by the TWSP PDBRM model, a plurality of normalized weighed vectors corresponding to the plurality of program verification techniques, wherein each of the plurality of normalized weighted vectors corresponds to a relative effectiveness of the associated verification technique of the plurality of program verification techniques, and wherein the relative effectiveness of each of the verification technique of the plurality of program verification techniques is predicted based on time taken to perform the program verification task;
> (d) ranking the plurality of program verification techniques in decreasing order based on the predicted plurality of normalized weighted vectors to generate a plurality of sorted program verification techniques, wherein the ranking sorts the plurality of program verification techniques in decreasing order of effectiveness towards verifying the program verification task; and
> (e) generating the privacy preserving program verification strategy based on the plurality of sorted program verification techniques.

5. The processor implemented method as claimed in claim 1,

wherein the plurality of sorted program verification techniques in the privacy preserving program verification strategy are applied on the program verification task in sequence until one of (i) the program verification task is completed, and (ii) a predefined time allocated for each of the program verification technique of the plurality of sorted program verification techniques is exceeded,

wherein for the privacy preserving program verification strategy if the plurality of property assertions in the program verification task hold true, a verification result is considered safe (S), wherein for the privacy preserving program verification strategy if at least one of the property assertions in the plurality of property assertions in the program verification task fails, the program verification task deems unsafe, and the verification result is considered as failure (F), and

wherein the verification result is considered as unknown (U) if the program verification task is not verified by the privacy preserving program verification strategy.

6. A system (100), comprising:

a memory (102) storing instructions;
one or more communication interfaces (106); and
one or more hardware processors (104) coupled to the memory (102) via the one or more communication interfaces (106), wherein the one or more hardware processors (104) are configured by the instructions to:

receive a program verification task comprising (i) an input program from among a plurality of input programs, and (ii) a plurality of property assertions to be verified for the input program, a portfolio comprising a plurality of program verification techniques, and a mode of execution;
extract a plurality of Boolean program features from the input program based on the mode of execution, wherein the plurality of Boolean program features comprises (i) a plurality of Boolean Relative Metrics (BRM), and (ii) a plurality of Portfolio Driven Boolean Relative Metrics (PDBRM); and
train a program verification strategy predictor by a strategy prediction service provider, using a plurality of obfuscated BRM corresponding to the plurality of BRM, and a plurality of obfuscated PDBRM corresponding to the plurality of PDBRM, to predict a privacy preserving program verification strategy for the program verification task, using one of a plurality of strategy prediction models in a privacy preserving Strategy Prediction (SPRED) architecture comprising (i) a Result Weighted Strategy Prediction (RWSP) BRM model, (ii) a RWSP PDBRM model, (iii) a Time Weighted Strategy Prediction (TWSP) BRM model, and (iv) a TWSP PDBRM model.

7. The system as claimed in claim 6,

wherein the program verification strategy predictor, during inferencing stage, predicts a privacy preserving program verification strategy for the program verification task using a plurality of Boolean feature vectors,
wherein the mode of execution comprises selection of one of strategy prediction model from among (i) a RWSP BRM model, (ii) a RWSP PDBRM model, (iii) a TWSP BRM model, and (iv) a TWSP PDBRM model, for the program verification task,
wherein the plurality of obfuscated BRM of the input program pertains to characteristics of the input program comprising (i) Boolean metrics, and (ii) Boolean relative metrics, wherein the Boolean metrics represents presence or absence of one of (i) a plurality of syntactic features, and (ii) a plurality of semantic features in the input program,
wherein the Boolean relative metrics represents presence of the plurality of syntactic features and the plurality of semantic features beyond a computed threshold in the input program,
wherein the computed threshold is an average of the number of occurrences of one of the (i) the plurality of syntactic features, and (ii) the plurality of semantic features in the plurality of input programs of the training data, and
wherein the plurality of obfuscated PDBRM features is selected based on strengths and weaknesses of the plurality of program verification techniques for checking the plurality of property assertions in the input program.

8. The system as claimed in claim 6, wherein the RWSP BRM model is trained with a labelled training data comprising the plurality of Boolean feature vectors corresponding to the plurality of obfuscated BRM of the input program, and the plurality of verification techniques from the portfolio that can verify the input program in a least amount of time compared to the other verification techniques in the portfolio, to generate a trained RWSP BRM model,

wherein the RWSP PDBRM model is trained with the labelled training data comprising the plurality of Boolean feature vectors corresponding to the plurality of obfuscated PDBRM of the input program, and the plurality of verification techniques from the portfolio that can verify the input program in the least amount of time compared to other verification techniques in the portfolio, to generate a trained RWSP PDBRM model,
wherein the TWSP BRM model is trained with the labelled training data comprising the plurality of Boolean feature vectors corresponding to the plurality of obfuscated BRM of the input program, and a plurality of weight vectors assigned to the plurality of program verification techniques in the portfolio, to generate the trained TWSP BRM model, and
wherein the TWSP PDBRM model is trained with the labelled training data comprising the plurality of Boolean feature vectors corresponding to the plurality of obfuscated PDBRM of the input program and the plurality of weight vectors assigned to the plurality of program verification techniques in the portfolio to generate a trained TWSP PDBRM model.

9. The system as claimed in claim 6, wherein the privacy preserving program verification strategy for the program verification task is predicted using the RWSP BRM model by:

(a) obfuscating the plurality of BRM, using an obfuscating technique, to generate the plurality of obfuscated BRM;
(b) feeding the plurality of Boolean feature vectors corresponding to the plurality of obfuscated BRM to the RWSP BRM model;
(c) predicting, by the RWSP BRM model, an associated likelihood of success of each of the plurality of program verification techniques to perform the program verification task;
(d) ranking the plurality of program verification techniques in decreasing order based on the predicted likelihood of success of the plurality of program verification techniques, to generate a plurality of prioritized sequence of program verification techniques, for performing the program verification task, wherein the ranking sorts the plurality of program verification techniques in decreasing order of effectiveness towards verifying the program verification task; and
(e) generating the privacy preserving program verification strategy based on the plurality of sorted program verification techniques,
wherein the privacy preserving program verification strategy for the program verification task is predicted using the RWSP PDBRM model by:

(a) obfuscating the plurality of PDBRM, using an obfuscating technique, to generate the plurality of obfuscated PDBRM;
(b) feeding the plurality of Boolean feature vectors corresponding to the plurality of obfuscated PDBRM to the RWSP PDBRM model;
(c) predicting, by the RWSP PDBRM model, the associated likelihood of success of each of the plurality of program verification techniques to perform the program verification task;
(d) ranking the plurality of program verification techniques in decreasing order based on the predicted likelihood of success of the plurality of program verification techniques, to generate a plurality of prioritized sequence of program verification techniques for performing the program verification task, wherein the ranking sorts the plurality of program verification techniques in decreasing order of effectiveness towards verifying the program verification task; and
(e) generating the privacy preserving program verification strategy based on the plurality of sorted program verification techniques,

wherein the privacy preserving program verification strategy for the program verification task is predicted using the TWSP BRM model by:

(a) obfuscating the plurality of BRM, using an obfuscating technique, to generate the plurality of obfuscated BRM;
(b) feeding the plurality of Boolean feature vectors corresponding to the plurality of obfuscated BRM to the TWSP BRM model;
(c) predicting, by the TWSP BRM model, a plurality of normalized weighed vectors corresponding to the plurality of program verification techniques, wherein each of the plurality of normalized weighted vectors corresponds to a relative effectiveness of the associated verification technique of the plurality of program verification techniques, and wherein the relative effectiveness of each of the verification technique of the plurality of program verification techniques is predicted based on time taken to perform the program verification task;
(d) ranking the plurality of program verification techniques in decreasing order based on the predicted plurality of normalized weighted vectors to generate a plurality of prioritized sequence of program verification techniques, wherein the ranking sorts the plurality of program verification techniques in decreasing order of effectiveness towards verifying the program verification task; and
(e) generating the privacy preserving program verification strategy based on the plurality of sorted program verification techniques, and

wherein the privacy preserving program verification strategy for the program verification task is predicted using the TWSP PDBRM model by:

(a) Obfuscating the plurality of PDBRM, using an obfuscating technique, to generate the plurality of obfuscated PDBRM;

(b) feeding the plurality of Boolean feature vectors corresponding to the plurality of obfuscated PDBRM to the TWSP PDBRM model;

(c) predicting, by the TWSP PDBRM model, a plurality of normalized weighted vectors corresponding to the plurality of program verification techniques, wherein each of the plurality of normalized weighted vectors corresponds to a relative effectiveness of the associated verification technique of the plurality of program verification techniques, and wherein the relative effectiveness of each of the verification technique of the plurality of program verification techniques is predicted based on time taken to perform the program verification task;

(d) ranking the plurality of program verification techniques in decreasing order based on the predicted plurality of normalized weighted vectors to generate a plurality of sorted program verification techniques, wherein the ranking sorts the plurality of program verification techniques in decreasing order of effectiveness towards verifying the program verification task; and

(e) generating the privacy preserving program verification strategy based on the plurality of sorted program verification techniques.

10. The system as claimed in claim 6,

wherein the plurality of sorted program verification techniques in the privacy preserving program verification strategy are applied on the program verification task in sequence until one of (i) the program verification task is completed, and (ii) a predefined time allocated for each of the program verification technique of the plurality of sorted program verification techniques is exceeded,

wherein for the privacy preserving program verification strategy if the plurality of property assertions in the program verification task hold true, a verification result is considered safe (S),

wherein for the privacy preserving program verification strategy if at least one of the property assertions in the plurality of property assertions in the program verification task fails, the program verification task deems unsafe and the verification result is considered as failure (F), and

wherein the verification result is considered as unknown (U) if the program verification task is not verified by the privacy preserving program verification strategy.

11. One or more non-transitory machine-readable information storage mediums comprising one or more instructions which when executed by one or more hardware processors cause:

receiving a program verification task comprising (i) an input program from among a plurality of input programs, and (ii) a plurality of property assertions to be verified for the input program, a portfolio comprising a plurality of program verification techniques, and a mode of execution;

extracting a plurality of Boolean program features from the input program based on the mode of execution, wherein the plurality of Boolean program features comprises one of (i) a plurality of Boolean Relative Metrics (BRM), and (ii) a plurality of Portfolio Driven Boolean Relative Metrics (PDBRM); and

training a program verification strategy predictor by a strategy prediction service provider, using a plurality of obfuscated BRM corresponding to the plurality of BRM, and a plurality of obfuscated PDBRM corresponding to the plurality of PRBRM, to predict a privacy preserving program verification strategy for the program verification task, using one of a plurality of strategy prediction models in a privacy preserving Strategy Prediction (SPRED) architecture comprising (i) a Result Weighted Strategy Prediction (RWSP) BRM model, (ii) a RWSP PDBRM model, (iii) a Time Weighted Strategy Prediction (TWSP) BRM model, and (iv) a TWSP PDBRM model.

12. The one or more non-transitory machine-readable information storage mediums as claimed in claim 11,

wherein the program verification strategy predictor, during inferencing stage, predicts the privacy preserving program verification strategy for the program verification task using a plurality of Boolean feature vectors,

wherein the mode of execution comprises selection of one of strategy prediction model from among (i) a RWSP BRM model, (ii) a RWSP PDBRM model, (iii) a TWSP BRM model, and (iv) a TWSP PDBRM model, for the program verification task,

wherein the plurality of obfuscated BRM of the input program pertains to characteristics of the input program comprising (i) Boolean metrics, and (ii) Boolean relative metrics, wherein the Boolean metrics represents presence or absence of one of (i) a plurality of syntactic features, and (ii) a plurality of semantic features in the input program,

wherein the Boolean relative metrics represents presence of the plurality of syntactic features and the plurality of semantic features beyond a computed threshold in the input program,

wherein the computed threshold is an average of the number of occurrences of one of the (i) the plurality of syntactic features, and (ii) the plurality of semantic features in the plurality of input programs of the training data,

wherein the plurality of obfuscated PDBRM features is selected based on strengths and weaknesses of the plurality of program verification techniques for checking the plurality of property assertions in the input program.

13. The one or more non-transitory machine-readable information storage mediums as claimed in claim 11, wherein the RWSP BRM model is trained with a labelled training data comprising the plurality of Boolean feature vectors corresponding to the plurality of obfuscated BRM of the input program, and the plurality of verification techniques from the portfolio that can verify the input program in a least amount of time compared to the other verification techniques in the portfolio, to generate a trained RWSP BRM model,

wherein the RWSP PDBRM model is trained with the labelled training data comprising the plurality of Boolean feature vectors corresponding to the plurality of obfuscated PDBRM of the input program, and the plurality of verification techniques from the portfolio that can verify the input program in the least amount of time compared to other verification techniques in the portfolio, to generate a trained RWSP PDBRM model,

wherein the TWSP BRM model is trained with the labelled training data comprising the plurality of Boolean feature vectors corresponding to the plurality of obfuscated BRM of the input program, and a plurality of weight vectors assigned to the plurality of program verification techniques in the portfolio, to generate the trained TWSP BRM model, and

wherein the TWSP PDBRM model is trained with the labelled training data comprising the plurality of Boolean feature vectors corresponding to the plurality of obfuscated PDBRM of the input program and the plurality of weight vectors assigned to the plurality of program verification techniques in the portfolio to generate a trained TWSP PDBRM model.

14. The one or more non-transitory machine-readable information storage mediums as claimed in claim 11, wherein the privacy preserving program verification strategy for the program verification task is predicted using the RWSP BRM model by:

(a) obfuscating the plurality of BRM, using an obfuscating technique, to generate the plurality of obfuscated BRM;

(b) feeding the plurality of Boolean feature vectors corresponding to the plurality of obfuscated BRM to the RWSP BRM model;

(c) predicting, by the RWSP BRM model, an associated likelihood of success of each of the plurality of program verification techniques to perform the program verification task;

(d) ranking the plurality of program verification techniques in decreasing order based on the predicted likelihood of success of the plurality of program verification techniques, to generate a plurality of prioritized sequence of program verification techniques, for performing the program verification task, wherein the ranking sorts the plurality of program verification techniques in decreasing order of effectiveness towards verifying the program verification task; and

(e) generating the privacy preserving program verification strategy based on the plurality of sorted program verification techniques,

wherein the privacy preserving program verification strategy for the program verification task is predicted using the RWSP PDBRM model by:

(a) obfuscating the plurality of PDBRM, using an obfuscating technique, to generate the plurality of obfuscated PDBRM;

(b) feeding the plurality of Boolean feature vectors corresponding to the plurality of obfuscated PDBRM to the RWSP PDBRM model;

(c) predicting, by the RWSP PDBRM model, the associated likelihood of success of each of the plurality of program verification techniques to perform the program verification task;

(d) ranking the plurality of program verification techniques in decreasing order based on the predicted likelihood of success of the plurality of program verification techniques, to generate a plurality of prioritized sequence of program verification techniques for performing the program verification task, wherein the ranking sorts the plurality of program verification techniques in decreasing order of effectiveness towards verifying the program verification task; and

(e) generating the privacy preserving program verification strategy based on the plurality of sorted program verification techniques,

wherein the privacy preserving program verification strategy for the program verification task is predicted using the TWSP BRM model by:

(a) obfuscating the plurality of BRM, using an obfuscating technique, to generate the plurality of obfuscated BRM;

(b) feeding the plurality of Boolean feature vectors corresponding to the plurality of obfuscated BRM to the TWSP BRM model;

(c) predicting, by the TWSP BRM model, a plurality of normalized weighed vectors corresponding to the plurality of program verification techniques, wherein each of the plurality of normalized weighted vectors corresponds to a relative effectiveness of the associated verification technique of the plurality of program verification techniques, and wherein the relative effectiveness of each of the verification technique of the plurality of program verification techniques is predicted based on time taken to perform the program verification task;

(d) ranking the plurality of program verification techniques in decreasing order based on the predicted plurality of normalized weighted vectors to generate a plurality of prioritized sequence of program verification techniques, wherein the ranking sorts the plurality of program verification techniques in decreasing order of effectiveness towards verifying the program verification task; and

(e) generating the privacy preserving program verification strategy based on the plurality of sorted program verification techniques, and

wherein the privacy preserving program verification strategy for the program verification task is predicted using the TWSP PDBRM model by:

(a) Obfuscating the plurality of PDBRM, using an obfuscating technique, to generate the plurality of obfuscated PDBRM;

(b) feeding the plurality of Boolean feature vectors corresponding to the plurality of obfuscated PDBRM to the TWSP PDBRM model;

(c) predicting, by the TWSP PDBRM model, a plurality of normalized weighted vectors corresponding to the plurality of program verification techniques, wherein each of the plurality of normalized weighted vectors corresponds to a relative effectiveness of the associated verification technique of the plurality of program verification techniques, and wherein the relative effectiveness of each of the verification technique of the plurality of program verification techniques is predicted based on time taken to perform the program verification task;

(d) ranking the plurality of program verification techniques in decreasing order based on the predicted plurality of normalized weighted vectors to generate a plurality of sorted program verification techniques, wherein the ranking sorts the plurality of program verification techniques in decreasing order of effectiveness towards verifying the program verification task; and

(e) generating the privacy preserving program verification strategy based on the plurality of sorted program verification techniques.

15. The one or more non-transitory machine-readable information storage mediums as claimed in claim 11, wherein the plurality of sorted program verification techniques in the privacy preserving program verification strategy are applied on the program verification task in sequence until one of (i) the program verification task is completed, and (ii) a predefined time allocated for each of the program verification technique of the plurality of sorted program verification techniques is exceeded,

wherein for the privacy preserving program verification strategy if the plurality of property assertions in the program verification task hold true, a verification result is considered safe (S),

wherein for the privacy preserving program verification strategy if at least one of the property assertions in the plurality of property assertions in the program verification task fails, the program verification task deems unsafe and the verification result is considered as failure (F), and

wherein the verification result is considered as unknown (U) if the program verification task is not verified by the privacy preserving program verification strategy.

SYSTEM

100

MEMORY

102

DATABASE

108

HARDWARE

PROCESSOR(S)

104

I/O INTERFACE(S)

106

**FIG. 1**

P → Boolean feature vectors generation → $f_1, f_2 \ldots f_n$ → Selected strategy prediction model → $w_1, w_2 \ldots w_n$ → Ranking program verification techniques

$w^1, w^2 \ldots w^N$   $T^1, T^2 \ldots T^N$

Portfolio of the program verification techniques ← $R_1, R_2 \ldots R_n$ → Invoking the program verification techniques

Result: {T,F,U}

**FIG. 2**

27

300

receiving a program verification task comprising (i) an input program, and (ii) a plurality of property assertions to be verified for the input program, a portfolio comprising a plurality of program verification techniques, and a selected mode of execution **302**

↓

extracting a plurality of Boolean program features from the input program based on the selected mode of execution, wherein the plurality of Boolean program features comprises one of (i) a plurality of Boolean Relative Metrics (BRM), and (ii) a plurality of Portfolio Driven Boolean Relative Metrics (PDBRM) **304**

↓

training program verification strategy predictor by a strategy prediction service provider hosted on a cloud, using a plurality of obfuscated BRM corresponding to the plurality of BRM, and a plurality of obfuscated PDBRM corresponding to the plurality of PRBRM, to predict a privacy preserving program verification strategy for the program verification task, using one of a plurality of strategy prediction models in a privacy preserving Strategy Prediction (SPRED) architecture comprising (i) a Result Weighted Strategy Prediction (RWSP) BRM model, (ii) a RWSP PDBRM model, (iii) a Time Weighted Strategy Prediction (TWSP) BRM model, and (iv) a TWSP PDBRM model **306**

## FIG. 3

**FIG. 4A**

**FIG. 4B**

**FIG. 4C**

**FIG. 5A**

**FIG. 5B**

Europäisches
Patentamt
European
Patent Office
Office européen
des brevets

# EUROPEAN SEARCH REPORT

**Application Number**

EP 25 17 9890

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DARKE PRIYANKA ET AL: "VeriAbsL: Scalable Verification by Abstraction and Strategy Prediction (Competition Contribution)", 20 April 2023 (2023-04-20), TOOLS AND ALGORITHMS FOR THE CONSTRUCTION AND ANALYSIS OF SYSTEMS; [LECTURE NOTES IN COMPUTER SCIENCE; LECT.NOTES COMPUTER], SPRINGER NATURE SWITZERLAND, CHAM, PAGE(S) 588 - 593, XP047658913, ISSN: 0302-9743 ISBN: 978-3-031-30819-2 [retrieved on 2023-04-20] * page 1 - page 4 * * figures 1-3 * ----- | 1-15 | INV. G06F8/75 G06F21/57 G06F11/3604 |
| A | DARKE PRIYANKA ET AL: "VeriAbs: A Tool for Scalable Verification by Abstraction (Competition Contribution)", 23 March 2021 (2021-03-23), SPRINGER, PAGE(S) 458 - 462, XP047580001, vol. 12652DOI: https://doi.org/10.1007/978-3-030-72013-1_32, * the whole document * ----- | 1-15 | |

**TECHNICAL FIELDS SEARCHED (IPC)**

G06F
G06N

The present search report has been drawn up for all claims

| Place of search | Date of completion of the search | Examiner |
|---|---|---|
| The Hague | 23 July 2025 | Dely, Peter |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421043123

**Non-patent literature cited in the description**

- **M. AFZAL** ; **A. ASIA** ; **A. CHAUHAN** ; **B. CHIM-DYALWAR** ; **P. DARKE** ; **A. DATAR** ; **S. KUMAR** ; **R VENKATESH**. VeriAbs: Verification by Abstraction and Test Generation. *ASE*, 2019, 1138-1141